# EUROPEAN PATENT APPLICATION

(11) **EP 4 730 183 A1**
(43) Date of publication of application: **22.04.2026**
(21) Application number: 25722458.4
(22) Date of filing: 23.04.2025
(51) Int. Cl.: G06F 21/85, G06F 21/55

(54) **ELECTRONIC DEVICE AND METHOD FOR REDUCING ATTACKS FROM UNIVERSAL SERIAL BUS, AND NON-TRANSITORY COMPUTER-READABLE STORAGE MEDIUM**

(30) Priority: 20.08.2024 KR 20240111654; 26.09.2024 KR 20240131161
(71) Applicant: Samsung Electronics Co., Ltd., Suwon-si, Gyeonggi-do 16677 (KR)
(72) Inventor: LEE, Wookwang, Suwon-si, Gyeonggi-do 16677 (KR); PARK, Hyungsik, Suwon-si, Gyeonggi-do 16677 (KR); SHIN, Dongrak, Suwon-si, Gyeonggi-do 16677 (KR); LEE, Juyoung, Suwon-si, Gyeonggi-do 16677 (KR); KIM, Byungjun, Suwon-si, Gyeonggi-do 16677 (KR); KIM, Woojin, Suwon-si, Gyeonggi-do 16677 (KR); PARK, Youngmin, Suwon-si, Gyeonggi-do 16677 (KR); IM, Hyungjae, Suwon-si, Gyeonggi-do 16677 (KR)
(74) Representative: Appleyard Lees IP LLP
(86) International application number: PCT/KR2025/005510
(87) International publication number: WO 2026/043002

(57) **Abstract**

An electronic device is provided. The electronic device, while the electronic device is in a lock state, identifies that an external electronic device is physically contacted, through the communication circuitry. The electronic device, based on identifying that the external electronic device is physically contacted, receives, from the external electronic device through the communication circuitry, a descriptor of the external electronic device. The electronic device, based on the descriptor, based on identifying that communication connection between the external electronic device and the electronic device was established before, establishes a communication connection with the external electronic device through the communication circuitry. The electronic device, based on the descriptor, based on identifying that the communication connection between the external electronic device and the electronic device was not established before, forgoes the communication connection with the external electronic device.

## Description

### [Technical Field]

The following descriptions relate to an electronic device, a method, and a non-transitory computer-readable storage medium for reducing an attack from universal serial bus (USB).

### [Background Art]

Universal serial bus (USB) is one of an input/output protocol for connecting electronic devices. As the electronic devices are connected through the USB, the electronic device may receive power from an external electronic device and/or exchange data with the external electronic device.

There is an attempt to steal data from the electronic device using the USB like this. For example, a USB drop attack may be an attack in which a USB drive installs malware and/or ransomware on the electronic device when the USB drive on which a program having a malicious purpose is installed is brought into contact with the electronic device.

### [Disclosure]

### [Technical Solution]

According to an aspect of the present disclosure, there is provided an electronic device. The electronic device comprises communication circuitry, at least one processor comprising processing circuitry, and memory, comprising one or more storage mediums, storing instructions. The instructions, when executed by the at least one processor individually or collectively, cause the electronic device to, while the electronic device is in a lock state, identify that an external electronic device is physically contacted, through the communication circuitry. The instructions, when executed by the at least one processor individually or collectively, cause the electronic device to, while the electronic device is in a lock state, based on identifying that the external electronic device is physically contacted, receive, from the external electronic device through the communication circuitry, a descriptor of the external electronic device. The instructions, when executed by the at least one processor individually or collectively, cause the electronic device to, while the electronic device is in the lock state, based on identifying, based on the descriptor, that the external electronic device is included in a connection allow list of the electronic device, establish, through the communication circuitry, a communication connection with the external electronic device. The instructions, when executed by the at least one processor individually or collectively, cause the electronic device to, while the electronic device is in the lock state, based on identifying, based on the descriptor, that the external electronic device is not included in the connection allow list, forgo the communication connection with the external electronic device.

The term forgo may be used to mean to go without the communication connection, to refrain from establishing the communication connection, or in some instances, to block the communication connection.

According to another aspect of the present disclosure, there is provided a method. The method is performed by an electronic device. Therefore, the method is a method of an electronic device. The method comprises, while the electronic device is in a lock state, identifying that an external electronic device is physically contacted, through communication circuitry of the electronic device. The method comprises, while the electronic device is in the lock state, based on identifying that the external electronic device is physically contacted, receiving, from the external electronic device through the communication circuitry, a descriptor of the external electronic device. The method comprises, while the electronic device is in the lock state, based on identifying, based on the descriptor, that the external electronic device is included in a connection allow list of the electronic device, establishing, through the communication circuitry, a communication connection with the external electronic device. The method comprises, while the electronic device is in the lock state, based on identifying, based on the descriptor, that the external electronic device is not included in the connection allow list, forgoing the communication connection with the external electronic device.

According to another aspect of the present disclosure, there is provided a transitory, or non-transitory, computer readable storage medium. The transitory, or non-transitory, computer readable storage medium comprises one or more programs including instructions. The instructions, when executed by at least one processor of an electronic device including communication circuitry individually or collectively, cause the electronic device to, while the electronic device is in the lock state, identify that an external electronic device is physically contacted, through the communication circuitry. The instructions, when executed by the at least one processor of the electronic device including the communication circuitry individually or collectively, cause the electronic device to, while the electronic device is in the lock state, based on identifying that the external electronic device is physically contacted, receive, from the external electronic device through the communication circuitry, a descriptor of the external electronic device. The instructions, when executed by the at least one processor of the electronic device including the communication circuitry individually or collectively, cause the electronic device to, while the electronic device is in the lock state, based on identifying, based on the descriptor, that the external electronic device is included in a connection allow list of the electronic device, establish, through the communication circuitry, a communication connection with the external electronic device. The instructions, when executed by the at least one processor of the electronic device including the communication circuitry individually or collectively, cause the electronic device to, while the electronic device is in the lock state, based on identifying, based on the descriptor, the external electronic device is not included in the connection allow list, forgo the communication connection with the external electronic device.

According to another aspect of the present disclosure, there is provide an electronic device. The electronic device comprises: communication circuitry, at least one processor comprising processing circuitry; and memory, comprising one or more storage mediums, storing instructions, wherein the instructions, when executed by the at least one processor individually or collectively, cause the electronic device to: identify that an external electronic device is physically contacted, through the communication circuitry, based on identifying that the external electronic device is physically contacted, identify a state of the electronic device, the state including a first state allowing the communication connection with the external electronic device while in the lock state and a second state restricting the communication connection with the external electronic device while in the lock state, based on that the state of the electronic device is the first state, establish, through the communication circuitry, the communication connection with the external electronic device, and based on that the state of the electronic device is the second state, determine whether to establish the communication connection with the external electronic device according to whether the electronic device is in the lock state.

### [Description of the Drawings]

FIG. 1 is a block diagram of an electronic device in a network environment, according to various embodiments;
FIG. 2A is a block diagram of electronic devices, according to an embodiment;
FIG. 2B is a block diagram of a program architecture of an electronic device, according to an embodiment;
FIG. 3 is a drawing indicating a pin layout of a connecting terminal, according to an embodiment;
FIG. 4A is a drawing indicating a user interface (UI) for setting universal serial bus (USB) security in an electronic device, according to an embodiment;
FIG. 4B is a drawing indicating a UI displayed in a lock state as USB security is set in an electronic device, according to an embodiment;
FIG. 4C is a drawing indicating a UI displayed in a lock state as USB security is set in an electronic device, according to an embodiment;
FIG. 5A is a block diagram of a memory space while an electronic device operates as a USB host, according to an embodiment;
FIG. 5B is a block diagram of a memory space while an electronic device operates as a USB device, according to an embodiment;
FIG. 6 is a flowchart indicating an operation performed during a physical contact in electronic devices, according to an embodiment;
FIG. 7 is a flowchart indicating an operation in which an electronic device obtains a descriptor, according to an embodiment;
FIG. 8 is a drawing indicating a structure of descriptors set by an electronic device, according to an embodiment;
FIG. 9A is a flowchart indicating an example in which an electronic device performs different operations according to a lock state, according to an embodiment;
FIG. 9B is a flowchart indicating an example in which an electronic device performs different operations according to a USB security state, according to an embodiment;
FIG. 9C is a flowchart indicating an example in which an electronic device performs different operations according to an after first unlock (AFU) state, according to an embodiment;
FIG. 9D is a flowchart indicating an example in which an electronic device performs different operations according to whether different conditions are met, according to an embodiment;
FIG. 9E is a flowchart indicating an example in which an electronic device performs different operations according to a lock state, according to an embodiment;
FIG. 10A is a flowchart indicating an example in which an electronic device determines whether to establish a communication connection with respect to an external electronic device operating as a USB device according to a lock time, according to an embodiment;
FIG. 10B is a flowchart indicating an example in which an electronic device determines whether to establish a communication connection with respect to an external electronic device operating as a USB device according to a connection allow list, according to an embodiment;
FIG. 10C is a flowchart indicating an example in which an electronic device determines whether to establish a communication connection with respect to an external electronic device operating as a USB device according to whether different conditions are met, according to an embodiment;
FIG. 10D is a flowchart indicating an example in which an electronic device determines whether to establish a communication connection with respect to an external electronic device operating as a USB device according to the number of times of contact during a lock state, according to an embodiment;
FIG. 11A is a flowchart indicating an example in which an electronic device determines whether to establish a communication connection with respect to an external electronic device operating as a USB host according to a lock time, according to an embodiment;
FIG. 11B is a flowchart indicating an example in which an electronic device determines whether to establish a communication connection with respect to an external electronic device operating as a USB host according to a function of the communication connection, according to an embodiment; and
FIG. 11C is a flowchart indicating an example in which an electronic device determines whether to establish a communication connection with respect to an external electronic device operating as a USB host according to whether different conditions are met, according to an embodiment.

### [Mode for Invention]

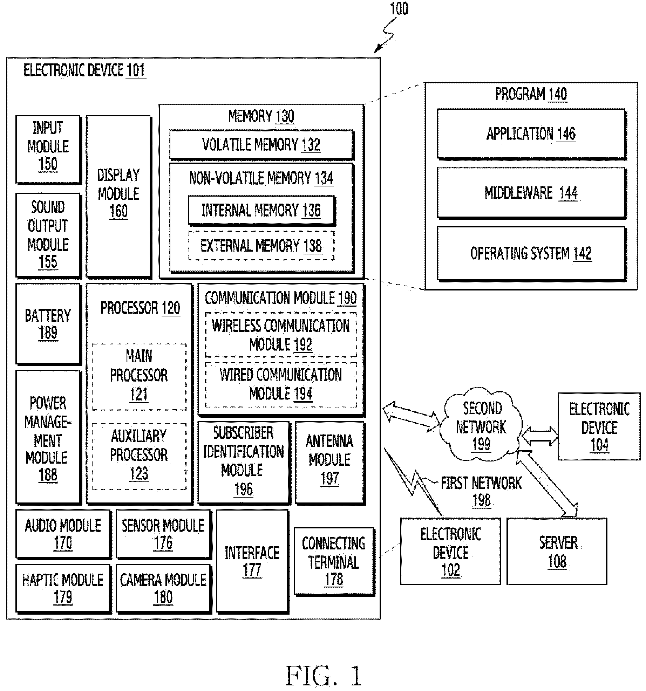

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

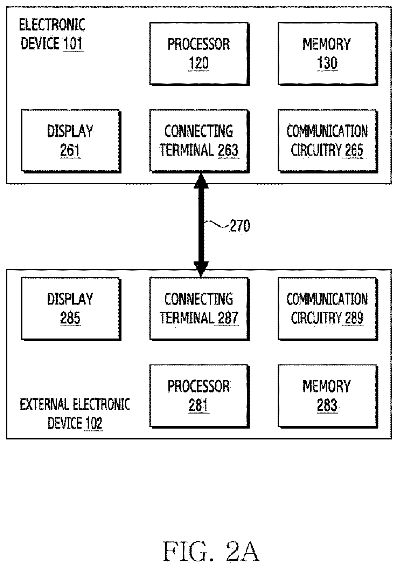

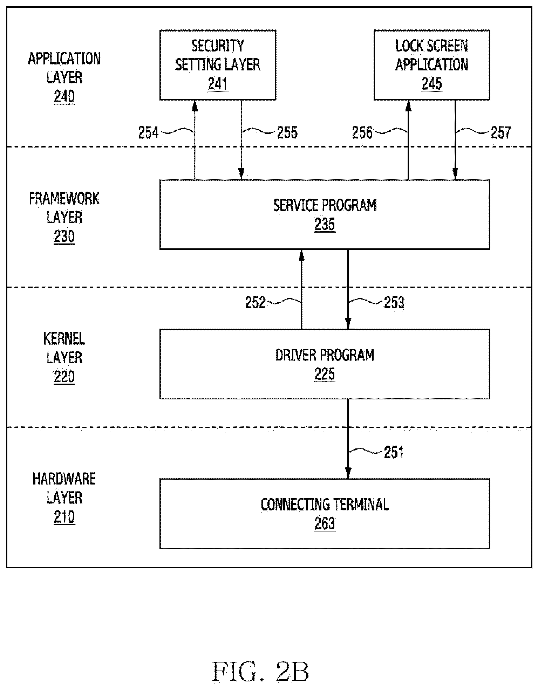

FIG. 2A is a block diagram of electronic devices according to an embodiment. FIG. 2B is a block diagram of a program architecture of an electronic device according to an embodiment.

Referring to FIG. 2A, an electronic device 101 may include a processor 120, memory 130, a display 261, a connecting terminal 263, and communication circuitry 265. In an embodiment, the processor 120 of FIG. 2A may correspond to the processor 120 of FIG. 1. In an embodiment, the memory 130 of FIG. 2A may correspond to the memory 130 of FIG. 1. In an embodiment, the display 261 of FIG. 2A may correspond to the display module 160 of FIG. 1. In an embodiment, the connecting terminal 263 of FIG. 2A may correspond to the connecting terminal 178 of FIG. 1. In an embodiment, the communication circuitry 265 of FIG. 2A may correspond to the communication module 190 of FIG. 1.

Referring to FIG. 2A, an external electronic device 102 may include a processor 281, memory 283, a display 285, a connecting terminal 287, and communication circuitry 289. In an embodiment, the electronic device 101 and the external electronic device 102 may be physically connected 270 (or contacted) through the connecting terminals 263 and 287.

In an embodiment, the external electronic device 102 may be a keyboard, a mouse, a microphone, a speaker, a headset, a monitor, a head mounted display (HMD), a docking station, a printer, a camera, and/or an automobile (or an electronic device embedded in the automobile).

Referring to FIG. 2B, an architecture of the electronic device 101 may include a hardware layer 210, a kernel layer 220, a framework layer 230, and an application layer 240. In an embodiment, the connecting terminal 263 may be included in the hardware layer 210. In an embodiment, a driver program 225 may be included in the kernel layer 220. In an embodiment, a service program 235 may be included in the framework layer 230. In an embodiment, a security setting application 241 and/or a lock screen application 245 may be included in the application layer 240. In an embodiment, the driver program 225, the service program 235, the security setting application 241, and/or the lock screen application 245 may be executed by the processor 120. In an embodiment, when the driver program 225, the service program 235, the security setting application 241, and/or the lock screen application 245 are executed by the processor 120, the electronic device 101 may perform operations (or functions) defined by the driver program 225, the service program 235, the security setting application 241, and/or the lock screen application 245.

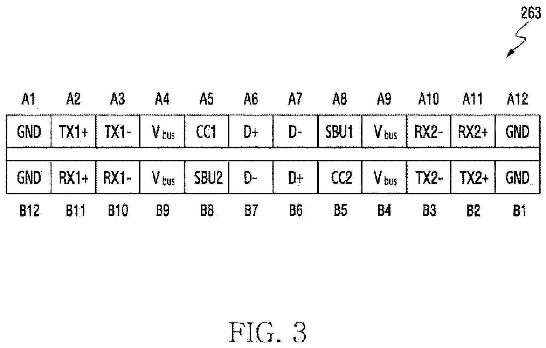

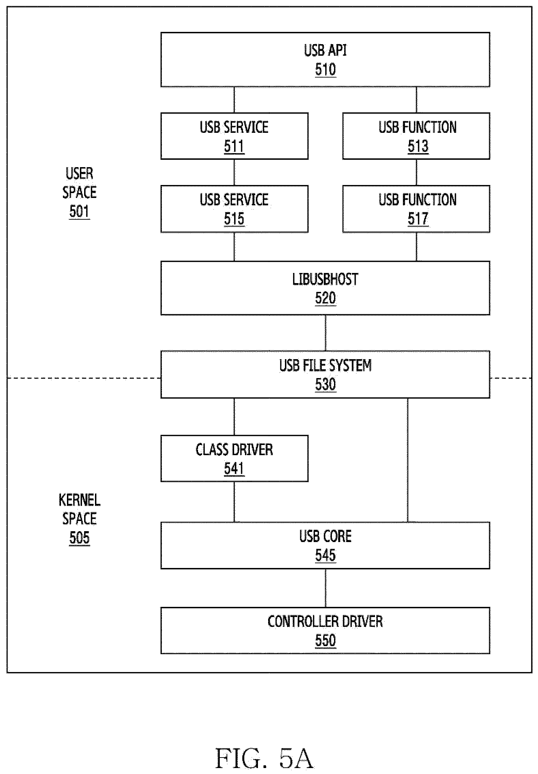

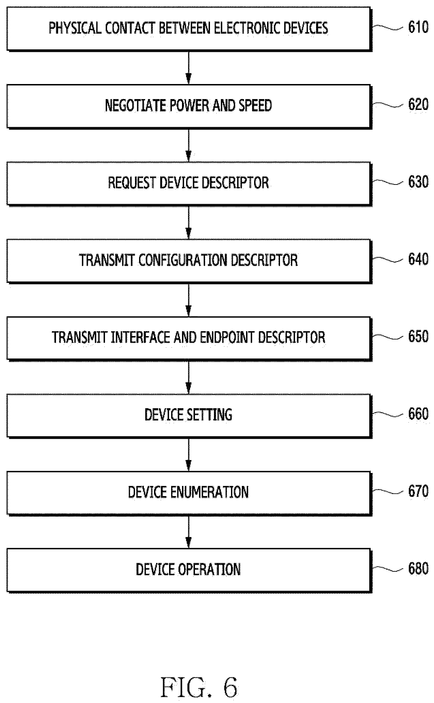

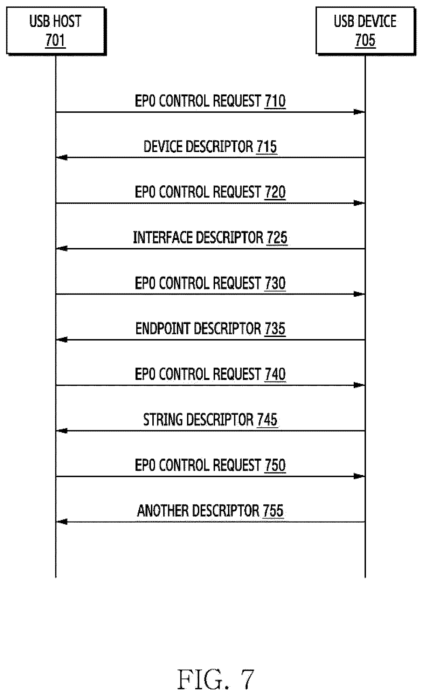

In an embodiment, the driver program 225 may identify a physical contact of the external electronic device 102 through a specific pin (e.g., CC1 (A5) and CC2 (B5) of FIG. 3) of the connecting terminal 263. In an embodiment, the driver program 225 may perform an operation (e.g., operations exemplified through FIGS. 6 and 7) for enumerating the external electronic device 102 based on identifying the physical contact of the external electronic device 102. The enumeration of the external electronic device 102 may include recognizing the external electronic device 102, activating a class driver (e.g., 541 of FIG. 5A) suitable for the recognized external electronic device 102, and registering the external electronic device 102 to the electronic device 101 so that the external electronic device 102 of the electronic device 101 is capable of being controlled through the activated class driver 541. When the enumeration of the external electronic device 102 is completed, a communication channel is formed between the electronic device 101 and the external electronic device 102, and communication between the electronic device 101 and the external electronic device 102 may be possible through the formed communication channel.

In an embodiment, the driver program 225 may determine a role (e.g., a USB host or a USB device) based on role information 251 identified through the specific pin (e.g., the CC1 (A5) and the CC2 (B5) of FIG. 3) of the connecting terminal 263. In an embodiment, the role information 251 may be a resistance value of the specific pin of the connecting terminal 263 and/or a message (e.g., a power delivery (PD) message) transmitted and received through the specific pin of the connecting terminal 263. For example, the driver program 225 may determine the role based on the resistance value of the specific pin of the connecting terminal 263. For example, the driver program 225 may determine the role based on the message (e.g., the PD message) transmitted and received through the specific pin of the connecting terminal 263.

In an embodiment, the driver program 225 may enable (or activate) and/or disable (inactivate) a driver for a USB host (e.g., a USB host driver) and/or a driver for a USB device (e.g., a USB device driver). In an embodiment, the driver program 225 may enable and/or disable the driver for the USB host and/or the driver for the USB device based on the determined role of the electronic device 101.

In an embodiment, the driver program 225 may disable the USB driver (e.g., the USB host driver and/or the USB device driver) based on information 253 related to a security setting from the service program 235. In an embodiment, the information 253 related to the security setting may indicate whether a communication connection of the USB is possible according to a state of the electronic device 101. For example, the information 253 related to the security setting may indicate one of three states (e.g., locking release (e.g., USB_NOTIFY_UNLOCK), locking and allowing (e.g., USB_NOTIFY_LOCK_USB_WORK), and locking and restricting (e.g., USB_NOTIFY_LOCK_USB_RESTRICT)). For example, the information 253 related to the security setting may be delivered from the service program 235 to the driver program 225 through a file system (e.g., sysfs, or usb_sl). For example, the driver program 225 may receive a control message indicating one of the states of USB_NOTIFY_UNLOCK, USB_NOTIFY_LOCK_USB_WORK, and USB_NOTIFY_LOCK_USB_RESTRICT through the file system (e.g., sysfs, or usb_sl).

For example, the information 253 related to the security setting may include a list (or a whitelist) of electronic devices in which the communication connection is allowed in a locking and restricting state. For example, the information 253 related to the security setting may include a list (or a blacklist) of electronic devices in which the communication connection is not allowed in the locking and restricting state. The electronic devices in which the communication connection is allowed in the locking and restricting state, included in the list (or the whitelist), may be the external electronic device 102 in which the communication connection with the electronic device 101 was established before.

For example, the USB_NOTIFY_UNLOCK may indicate that the electronic device 101 is in an unlock state. In an embodiment, the driver program 225 may establish the communication connection between the electronic device 101 and the electronic device 102 based on the USB_NOTIFY_UNLOCK. For example, in case of receiving the USB_NOTIFY_UNLOCK, the driver program 225 may establish the communication connection based on the USB between the electronic device 101 and the external electronic device 102 when the lock screen application 245 indicates a state that is not the lock state (or the unlock state).

For example, the USB_NOTIFY_LOCK_USB_WORK may indicate that the electronic device 101 is in the lock state, but the communication connection with the electronic device 102 through the USB is allowed. In an embodiment, the driver program 225 may establish the communication connection between the electronic device 101 and the electronic device 102 based on the USB_NOTIFY_LOCK_USB_WORK. In an embodiment, the lock state of the electronic device 101 may be a state in which access to a memory 130 of the electronic device 101 is restricted. In an embodiment, the lock state of the electronic device 101 may be a state in which execution of some functions (e.g., a function requiring login to a user account, or a function requiring user authentication) that the electronic device 101 may provide is restricted. In an embodiment, the lock state of the electronic device 101 may be a state in which a lock screen is being displayed through the display 261. In an embodiment, the locked state of the electronic device 101 may be a state in which switching from the lock screen to the screen of an application is restricted while the lock screen is being displayed through the display 261. In an embodiment, the lock state of the electronic device 101 may be a state in which a restricted screen of the application is displayed while the application is operating.

For example, in case of receiving the USB_NOTIFY_LOCK_USB_WORK, the driver program 225 may establish the communication connection between the electronic device 101 and the external electronic device 102 based on the USB when indicating the lock state in the lock screen application 245.

For example, the USB_NOTIFY_LOCK_USB_RESTRICT may indicate that the electronic device 101 is in the lock state and the communication connection between the electronic device 101 and the electronic device 102 is not allowed. In an embodiment, the driver program 225 may establish the communication connection with the electronic device 102 according to a specified condition is met based on the USB_NOTIFY_LOCK_USB_RESTRICT. In an embodiment, the driver program 225 may not establish the communication connection with the electronic device 102 according to the specified condition is not met based on the USB_NOTIFY_LOCK_USB_RESTRICT.

For example, the driver program 225 may determine whether to establish the communication connection with the electronic device 102 according to whether the electronic device 102 is included in the list (or the white list) of electronic devices with which the communication connection is allowed while the state of the electronic device 101 is in the locking and restricting state (USB_NOTIFY_LOCK_USB_RESTRICT).

For example, in case of receiving the USB_NOTIFY_LOCK_USB_RESTRICT, the driver program 225 may restrict the USB-based communication connection between the electronic device 101 and the external electronic device 102 when indicating the lock state in the lock screen application 245. For example, in case of receiving the USB_NOTIFY_LOCK_USB_RESTRICT, the driver program 225 may establish the communication connection based on the USB between the electronic device 101 and the external electronic device 102 included in the list (or the white list) of the electronic devices with which the communication connection is allowed when indicating the lock state in the lock screen application 245.

In an embodiment, the driver program 225 may cease an operation (e.g., operations exemplified through FIGS. 6 and 7) for enumerating the external electronic device 102 based on determining not to establish the communication connection (or releasing the communication connection) with the external electronic device 102. In an embodiment, the driver program 225 may disable (or unload) the driver for the USB host and/or the driver for the USB device based on determining not to establish the communication connection (or releasing the communication connection) with the external electronic device 102.

For example, the driver program 225 may deliver information 252 to the service program 235. For example, the information 252 may include device information of the electronic device 102. For example, the information 252 may include information indicating whether the communication connection with the electronic device 102 is established. For example, the information 252 may include information indicating enabling and/or disabling of the USB driver (e.g., the USB host driver and/or the USB device driver).

For example, the service program 235 may manage a white list and/or a black list based on device information (or a device descriptor) from the driver program 225. For example, the service program 235 may add identification information (e.g., a vendor identifier (ID) and a product ID) of the external electronic device 102 connected through the connecting terminal 263 to the white list while the electronic device 101 is unlocked. For example, a unique value may be assigned to each manufacturer to the vendor ID. For example, a unique value may be assigned to each product in the product ID.

For example, the service program 235 may determine whether the electronic device 101 is in the lock state based on lock state information 257 from a lock screen application 455. For example, the service program 235 may measure time elapsed (or lock time) after the electronic device 101 entered the lock state. For example, the service program 235 may deliver the information 253 related to the security setting for disabling the USB driver (e.g., the USB host driver and/or the USB device driver) to the driver program 225 based on that the lock time elapses a specified time (e.g., 1 hour). For example, the service program 235 may display a visual object (or a toast message) indicating that the electronic device 101 needs to be unlocked for the communication connection with the external electronic device 102 through the display 261 based on that the lock time elapses the specified time (e.g., 1 hour).

In an embodiment, the service program 235 may control the communication connection with the electronic device 102 based on security setting information 255 from the security setting application 451 and/or lock state information 257 from the lock screen application 455. In an embodiment, in the security setting information 255, the security setting of the electronic device 101 being enabled is determined as a default value.

For example, the service program 235 may set whether to restrict the communication connection with the external electronic device 102 through the connecting terminal 263 while the electronic device 101 is in the lock state based on whether the security setting of the electronic device 101 indicated by the security setting information 255 is enabled. For example, the service program 235 may provide the driver program 225 with the information 253 related to the security setting indicating locking and restricting (e.g., USB_NOTIFY_LOCK_USB_RESTRICT) in the lock state of the electronic device 101, based on identifying that the security setting of the electronic device 101 is enabled based on the security setting information 255. For example, the service program 235 may provide the driver program 225 with the information 253 related to the security setting indicating locking and allowing (e.g., USB_NOTIFY_LOCK_USB_WORK) in the lock state of the electronic device 101 based on identifying that the security setting of the electronic device 101 is disabled based on the security setting information 255.

For example, the service program 235 may deliver information 254 and 256 on the current state to the security setting application 451 and/or the lock screen application 455. The information 254 and 256 on the current state may indicate whether there is a physical contact of the external electronic device 102 through the connecting terminal 263.

According to an embodiment, the electronic device 101 may distinguish the external electronic device 102 to be blocked during the lock state through an AI model (an on-device AI model loaded on the electronic device 101 or an AI model of a server 108) trained to distinguish the external electronic device 102 performing an abnormal USB connection attempt. For example, the AI model may distinguish the external electronic device 102 performing the abnormal USB connection attempt based on learning a vendor ID and a product ID of the external electronic device 102 having malicious purposes.

According to an embodiment, the electronic device 101 may receive a white list and/or a black list from the server 108. In an embodiment, the electronic device 101 may perform the communication connection with the external electronic device 102 included in the white list while the electronic device 101 is in the lock state. In an embodiment, the electronic device 101 may block the communication connection with the external electronic device 102 included in the black list regardless of the lock state of the electronic device 101. In an embodiment, the server 108 may manage the vendor ID and the product ID of the external electronic device 102 reported as performing an abnormal USB connection attempt, in the black list.

As described above, the electronic device 101 may block the communication connection of the external electronic device 102 for a USB drop attack while the electronic device 101 is in the lock state. Accordingly, the electronic device 101 may reduce stealing of important information (e.g., personal information of a user) of the electronic device 101 by installing malware and/or ransomware on the electronic device 101 through the USB communication connection.

FIG. 3 is a drawing indicating a pin layout of a connecting terminal according to an embodiment.

Referring to FIG. 3, a plurality of pins formed in a connecting terminal 263 based on a connector of a USB Type C standard are illustrated. The connecting terminal 263 may have a structure based on a receptacle of the USB Type C standard. Based on the structure of the receptacle of the USB Type C standard, an A surface and a B surface may be formed in the connecting terminal 263 and twelve pins may be respectively disposed on the A surface and the B surface. For example, the twelve pins disposed on the A surface of the connecting terminal 263 may include GND (A1), TX1+ (A2), TX1- (A3), V_{BUS} (A4), CC1 (A5), D+ (A6), D- (A7), SBU1 (A8), V_{BUS} (A9), RX2- (A10), RX2+ (A11), and GND (A12). For example, the twelve pins disposed on the B surface of the connecting terminal 263 may include GND (B1), TX2+ (B2), TX2- (B3), V_{BUS} (B4), CC2 (B5), D+ (B6), D- (B7), SBU2 (B8), V_{BUS} (B9), RX1- (B10), RX1+ (B11), GND (B12). Names of the pins described above may correspond to names included in a standard related to the receptacle of the USB Type C standard.

In an embodiment, TX1+(A2), TX1-(A3), TX2-(B3), and TX2+(B2) may be used for data transmission. In an embodiment, RX2-(A10), RX2+(A11), RX1+(B11), and RX1-(B10) may be used for data reception. In an embodiment, V_{BUS}(A4), V_{BUS}(A9), V_{BUS}(B4), and V_{BUS}(B9) may be used for power supply. In an embodiment, CC1(A5) and CC2(B5) may be used for a channel configuration. In an embodiment, D+(A6), D-(A7), D-(B7), and D+(B6) may be used for data transmission and reception (e.g., high-speed communication). In an embodiment, SBU1 (A8) and SBU2 (B8) may be used to use a side band. In an embodiment, GND (A1), GND (A12), GND (B1), and GND (B12) may be used for grounding.

In an embodiment, CC1 (A5) and CC2 (B5) included in the USB Type C standard may be used to identify insertion (or contact) detection, disconnection (or, contact release), and a connector connection mode of a connector (e.g., a plug) of the USB Type C standard. For example, when an electronic device 101 and an electronic device 102 are connected through connecting terminals 263 and 287, an electrical signal (e.g., a resistance value, a digital ID (identifier), or a resistance ID) may be exchanged through CC1 (A5) and CC2 (B5). The electronic device 101 and the electronic device 102 may detect the insertion (or contact) or the disconnection (or contact release). The electronic device 101 and the electronic device 102 may determine the connector connection mode (e.g., a downstream facing port (DFP) mode (e.g., a mode providing data), an upstream facing port (UFP) mode (e.g., a mode receiving data), a source mode (e.g., a mode providing power), and/or a sink mode (e.g., a mode receiving power)).

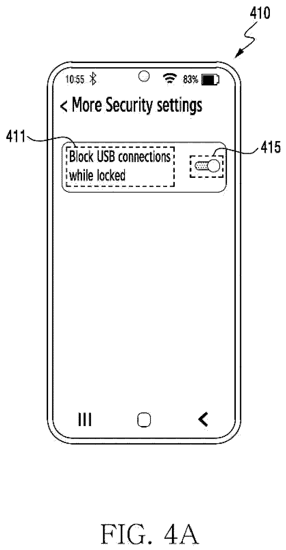

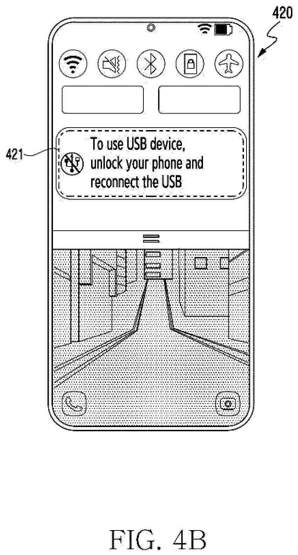

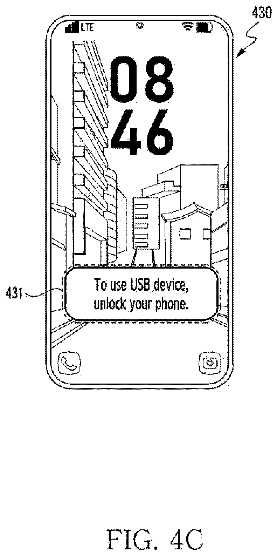

FIG. 4A is a drawing indicating a user interface (UI) for setting universal serial bus (USB) security in an electronic device, according to an embodiment. FIG. 4B is a drawing indicating a UI displayed in a lock state as USB security is set in an electronic device, according to an embodiment. FIG. 4C is a drawing indicating a UI displayed in a lock state as USB security is set in an electronic device, according to an embodiment.

FIGS. 4A to 4C may be described based on the electronic device 101 of FIG. 2A and the program architecture of FIG. 2B.

In an embodiment, referring to FIG. 4A, an electronic device 101 may display a screen 410 for setting USB security through a display 261. In an embodiment, a visual object 411 and a toggle 415 may be displayed on the screen 410 asking whether to limit (or block) (hereinafter, USB security ON) a communication connection with an external electronic device 102 through a connecting terminal 263 in a lock state. In an embodiment, according to a user input with respect to the toggle 415, the electronic device 101 may limit (or block) (hereinafter, USB security ON) or allow (hereinafter, USB security OFF) the communication connection with the external electronic device 102 through the connecting terminal 263 in the lock state.

In an embodiment, the setting of the USB security according to the user input with respect to the toggle 415 may be managed by a security setting application (e.g., the 241 of FIG. 2B). For example, the setting of USB security according to the user input with respect to the toggle 415 may be provided by a security setting application 241 to a service program (e.g., the 235 of FIG. 2B).

In an embodiment, the service program 235 may allow or limit the communication connection of the external electronic device 102 according to the setting of the USB security, based on identifying that the electronic device 101 is in the lock state through a lock screen application (e.g., the 245 of FIG. 2B) and identifying that the contact of the external electronic device 102 with respect to the connecting terminal 263 through a driver program 225.

In an embodiment, in a USB security ON state, the service program 235 may display a visual object (or a toast message) indicating that the electronic device 101 needs to be unlocked for the communication connection with the external electronic device 102 through the display 261 based on being in the lock state and identifying a physical contact of the external electronic device 102.

For example, referring to FIG. 4B, in the USB security ON state, the service program 235 may display a screen 420 including a notification 421 including a specified phrase (e.g., "Unlock your phone to use the connected USB device") through the display 261 based on being in the lock state and identifying the number of the physical contact of the external electronic device 102 is more than a specified number of times (e.g., 10 times).

For example, referring to FIG. 4C, in the USB security ON state, the service program 235 may display a screen 430 including a notification 431 including a specified phrase (e.g., "To use USB device, unlock your phone.") through the display 261 based on being in the locked state and elapsing of the specified time after entering the lock state.

FIG. 5A is a block diagram of a memory space while an electronic device operates as a USB host, according to an embodiment.

In an embodiment, the drawing of FIG. 5A may illustrate a situation in which, in a driver program (e.g., the 225 of FIG. 2B), a role of the electronic device is determined to be a USB host based on role information (e.g., the 251 of FIG. 2B) identified through a specific pin (e.g., CC1(A5) and CC2(B5) of FIG. 3) of a connecting terminal (the 263 of FIG. 2B). In an embodiment, the role information 251 may be a resistance value of the specific pin of the connecting terminal 263 and/or a message (e.g., a power delivery (PD) message) transmitted and received through the specific pin of the connecting terminal 263.

Referring to FIG. 5A, a USB API 510, USB services 511 and 515, USB functions 513 and 517, and a libusbhost 520 may be included in a user space 501. Libusbhost may be a USB host library. In an embodiment, a class driver 541, a USB core 545, and a controller driver 550 (or an extensible host controller interface (XHCI)) may be included in a kernel space 505. In an embodiment, the controller driver 550 may be a USB dual role device (DRD) controller capable of performing both a role of a host controller driver and a device controller driver. In an embodiment, the user space 501 and the kernel space 505 may be connected through a USB file system 530.

In an embodiment, the USB services 511 and 515 may provide a service for an application (e.g., the application 146 in FIG. 1) to control a USB device. In an embodiment, the USB functions 513 and 517 may provide a function provided by the USB device to an electronic device 101. The USB API 510 may include an application programming interface (API) for controlling the USB device. The libusbhost 520 may provide a library for the electronic device 101 to operate as a USB host. The class driver 541 may be a driver program (e.g., a HID class, an audio class, or a storage class) corresponding to a USB class code for operating an external electronic device 102 (e.g., an accessory) physically contacted through the connecting terminal 263. The USB core 545 may control (e.g., enable or disable) the class driver 541 for the external electronic device 102 connected to the electronic device 101 through the connecting terminal 263.

In an embodiment, the application (e.g., the application 146 in FIG. 1) of the user space 501 may use a framework of the USB interface through the USB API 510. For example, the libusbhost 520 may be connected to the USB file system 530. For example, the USB core 545 of the electronic device 101 may identify that the electronic device 102 is connected to the electronic device 101 through the connecting terminal 263. For example, the USB core 545 of the electronic device 101 may identify that the electronic device 102 is connected to the electronic device 101 based on a signal transmitted through the controller driver 550 when the electronic device 102 is physically connected to the electronic device 101 through the connecting terminal 263.

For example, when the external electronic device (e.g., the 102 of FIG. 1) is connected to the electronic device 101 through the connecting terminal 263, the USB core 545 of the electronic device 101 may enable a class driver 541 (or load on memory 130) for using the external electronic device 102. For example, the USB core 545 of the electronic device 101 may receive a device descriptor (or an interface descriptor) from the electronic device 102. For example, the device descriptor (or the interface descriptor) may include a USB class code of the electronic device 102 connected to the connecting terminal 263. The USB core 545 may enable (or load) the class driver 541 corresponding to the USB class code of the electronic device 102.

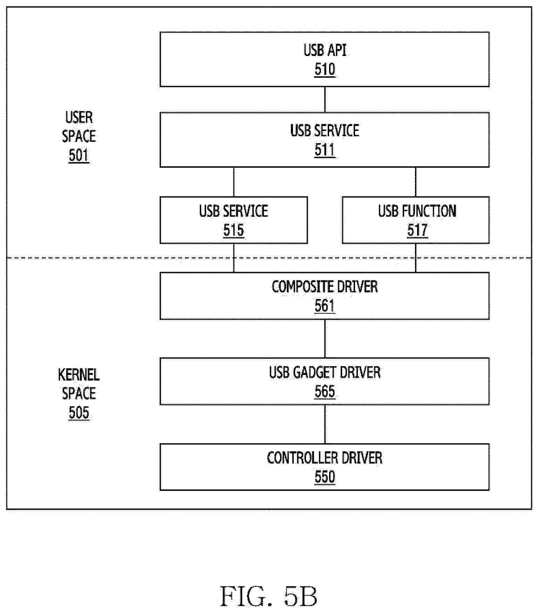

FIG. 5B is a block diagram of a memory space while an electronic device operates as a USB device, according to an embodiment.

In an embodiment, the drawing of FIG. 5A may illustrate a situation in which, in the driver program, the role of the electronic device is determined as the USB device based on the role information (the 251 of FIG. 2B) identified through the specific pin (e.g., CC1(A5) and CC2(B5) of FIG. 3) of the connecting terminal (the 263 of FIG. 2B). In an embodiment, the role information 251 may be the resistance value of the specific pin of the connecting terminal 263 and/or the message (e.g., the power delivery (PD) message) transmitted and received through the specific pin of the connecting terminal 263.

Referring to FIG. 5B, the USB API 510, the USB services 511 and 515, and the USB function 517 may be included in the user space 501. In an embodiment, a composite driver 561, a USB gadget driver 565, and a controller driver 550 may be included in the kernel space 505. When the electronic device 101 operates as the USB device, the controller driver 550 may be referred to as a USB device controller (UDC). The USB gadget driver 565 may be a driver program for supporting various modes of the USB device. The composite driver 561 may include a USB function driver. In an embodiment, the composite driver 561 may configure a function of the USB device through the USB function driver. For example, after a device connection through the USB service, the composite driver 561 may control the electronic device 101 to operate as a USB device for providing a media transfer protocol (MTP), which is a protocol for transmitting and receiving various data, or an Android open accessory (AOA) (or Android auto) for providing information in connection with an automobile. The USB function driver may be a function driver for the media transfer protocol (MTP), tethering, an Android debug bridge (ADB), an abstract control model (ACM), and/or the Android open accessory (AOA).

In an embodiment, in order for the electronic device 101 to operate in a specific mode of the USB device, a specific USB function driver may be required. In addition, a type of USB function driver that is required may be different for each mode of the USB device. In an embodiment, the electronic device 101 may configure a USB function driver that is necessary according to the mode of the USB device. For example, the electronic device 101 may enable the USB function driver necessary for an operation of the USB device in the specific mode and disable an unnecessary USB function driver.

FIG. 6 is a flowchart indicating an operation performed during a physical contact in electronic devices, according to an embodiment.

FIG. 6 may be described based on the electronic device 101 of FIG. 2A and the program architecture of FIG. 2B. In the description of FIG. 6, it may be assumed that an electronic device 101 is a USB host, and an external electronic device 102 is a USB device. However, it is not limited thereto. For example, in the description of FIG. 6, the electronic device 101 may be the USB device, and the external electronic device 102 may be the USB host.

Referring to FIG. 6, in operation 610, the electronic device 101 and the external electronic device 102 may physically contact each other through connecting terminals 263 and 287. A state in which the electronic device 101 and the external electronic device 102 physically contact each other through the connecting terminals 263 and 287 may be referred to as a device connection.

In operation 620, the electronic device 101 may negotiate power and speed with the external electronic device 102. For example, the electronic device 101 may negotiate a data transmission speed with the external electronic device 102 while transmitting a signal for supplying power to the external electronic device 102.

In operation 630, the electronic device 101 may request a device descriptor to the external electronic device 102. In an embodiment, the device descriptor may include information on a manufacturer ID, a product ID, and/or a USB version.

In operation 640, the external electronic device 102 may transmit a configuration descriptor to the electronic device 101. In an embodiment, the configuration descriptor may indicate configuration information such as the number of interfaces and/or the number of endpoints of the external electronic device 102.

In operation 650, the external electronic device 102 may transmit an interface descriptor and an endpoint descriptor to the electronic device 101. In an embodiment, the interface descriptor and the endpoint descriptor may indicate a communication protocol used in the external electronic device 102.

In operation 660, the electronic device 101 may perform a device setting. For example, the electronic device 101 may determine a descriptor to be configured based on information (e.g., descriptors) transmitted from the external electronic device 102, and may perform the device setting for the external electronic device 102 according to the determined descriptor. For example, the electronic device 101 may load a driver corresponding to the determined descriptor.

In operation 670, the electronic device 101 may perform device enumeration. For example, the electronic device 101 may allocate a unique address to the external electronic device 102. Thereafter, the electronic device 101 may perform communication with the external electronic device 102 by using the unique address.

In operation 680, the electronic device 101 may perform a device operation with respect to the external electronic device 102 by using the unique address. For example, the electronic device 101 may transmit data to the external electronic device 102 or receive data from the external electronic device 102 by using the unique address.

FIG. 7 is a flowchart indicating an operation in which an electronic device obtains a descriptor, according to an embodiment.

In the description of FIG. 7, it may be assumed that a USB host 701 is an electronic device 101, and a USB device 705 is an external electronic device 102. However, it is not limited thereto. For example, in the description of FIG. 7, the USB host 701 may be the external electronic device 102, and the USB device 705 may be the electronic device 101.

In operation 710, the USB host 701 may transmit a control request to the USB device 705 through an end point 0 (EP0). The control request in the operation 710 may be a request of a device descriptor. In operation 715, the USB device 705 may transmit the device descriptor to the USB host 701.

In operation 720, the USB host 701 may transmit a control request to the USB device 705 through the end point 0 (EP0). The control request in the operation 720 may be a request from an interface descriptor. In operation 725, the USB device 705 may transmit the interface descriptor to the USB host 701.

In operation 730, the USB host 701 may transmit a control request to the USB device 705 through the end point 0 (EP0). The control request in the operation 730 may be a request from an endpoint descriptor. In operation 735, the USB device 705 may transmit the endpoint descriptor to the USB host 701.

In operation 740, the USB host 701 may transmit a control request to the USB device 705 through the end point 0 (EP0). The control request in the operation 740 may be a request from a string descriptor. In operation 745, the USB device 705 may transmit the string descriptor to the USB host 701.

In operation 750, the USB host 701 may transmit a control request to the USB device 705 through the end point 0 (EP0). The control request in the operation 750 may be a request of another descriptor different from the descriptor requested in the operations 710, 720, 730, and 740. In operation 755, the USB device 705 may transmit the other descriptor to the USB host 701.

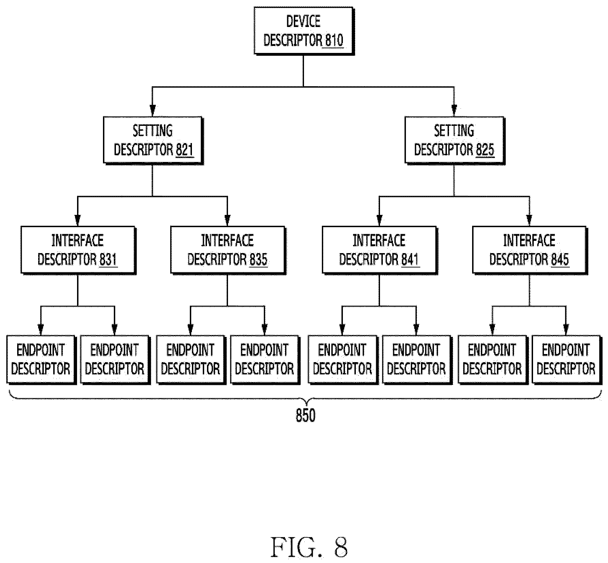

FIG. 8 is a drawing indicating a structure of descriptors set by an electronic device, according to an embodiment.

Referring to FIG. 8, a device descriptor 810 for an external electronic device 102 may be one. Setting descriptors 821 and 825 may be configured on a child node with respect to the device descriptor 810. Interface descriptors 831, 835, 841, and 845 may be configured on a child node for each of the setting descriptors 821 and 825. Endpoint descriptors 850 may be configured on a child node for each of the interface descriptors 831, 835, 841, and 845.

In an embodiment, an electronic device 101 may allocate a setting number to the setting descriptors 821 and 825 configured by the electronic device 101 among setting descriptors from the external electronic device 102. In an embodiment, the electronic device 101 may allocate the setting numbers of the setting descriptors 821 and 825 through information (e.g., bNumConfigurations) indicating the number of the setting descriptors 821 and 825 with respect to the external electronic device 102.

In an embodiment, the electronic device 101 may allocate an interface number with respect to the interface descriptors 831, 835, 841, and 845 configured by the electronic device 101 among interface descriptors from the external electronic device 102. In an embodiment, the electronic device 101 may allocate the interface number of the interface descriptors 831, 835, 841, and 845 through information (e.g., bNumInterfaces) indicating the number of the interface descriptors 831, 835, 841, and 845 with respect to the external electronic device 102.

In an embodiment, the electronic device 101 may allocate an endpoint number with respect to the endpoint descriptors 850 configured by the electronic device 101 among endpoint descriptors from the external electronic device 102. In an embodiment, the electronic device 101 may allocate the endpoint number of the endpoint descriptors 850 through information (e.g., bNumEndpoints) indicating the number of endpoint descriptors 850 for the external electronic device 102.

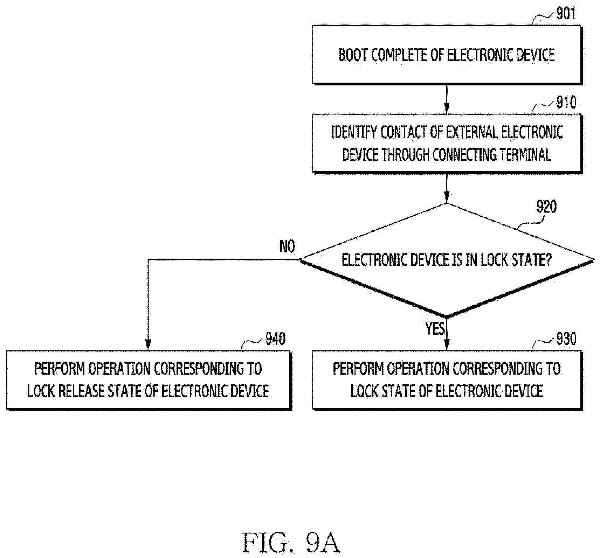

FIG. 9A is a flowchart indicating an example in which an electronic device performs different operations according to a lock state, according to an embodiment.

FIG. 9A may be described with reference to FIGS. 1 to 8.

Referring to FIG. 9A, in operation 901, an electronic device 101 may identify a boot complete of the electronic device 101. In an embodiment, the electronic device 101 may boot (e.g., loading an operating system (e.g., the 142 of FIG. 1) on volatile memory (e.g., the 132 of FIG. 1)) the electronic device 101. In an embodiment, the electronic device 101 may boot the electronic device 101 in response to an input for turning on the electronic device 101 in a state in which the electronic device 101 is turned off. In an embodiment, when the booting of the electronic device 101 is completed, the electronic device 101 may broadcast a boot complete (e.g., BOOT_COMPLETED) to other applications. In an embodiment, the booting of the electronic device 101 being completed (or the boot complete) may indicate that the electronic device 101 is possible to use. In an embodiment, the booting of the electronic device 101 being completed (or the boot complete) may include switching from a screen indicating that booting is in progress to a lock screen through a display 261 of the electronic device 101. In an embodiment, the booting of the electronic device 101 may be loading a main operating system in volatile memory (e.g., the 132 of FIG. 1) instead of an auxiliary operating system. In an embodiment, the auxiliary operating system may be an operating system that provides a restricted function (e.g., displaying of a screen indicating that charging is being performed). The main operating system may be an operating system for the electronic device 101 to provide various functions to a user.

In operation 910, the electronic device 101 may identify a contact of the external electronic device 102 through a connecting terminal 263. In an embodiment, the electronic device 101 may identify the contact of the external electronic device 102 through the connecting terminal 263 after the boot complete. According to an embodiment, the contact of the external electronic device 102 through the connecting terminal 263 may be made before the booting of the electronic device 101 or during the booting of the electronic device 101. In an embodiment, identifying of the contact of the external electronic device 102 through the connecting terminal 263 for the operations of FIG. 9A may be performed after the boot complete of the electronic device 101.

In operation 920, the electronic device 101 may determine whether the electronic device 101 is in a lock state. For example, the electronic device 101 may determine whether the electronic device 101 is in the lock state based on lock state information 257 from a lock screen application 245.

In the operation 920, the electronic device 101 may perform operation 930 based on determining that the electronic device 101 is in the lock state. In the operation 920, the electronic device 101 may perform operation 940 based on determining that the electronic device 101 is not in the lock state (or is in an unlock state).

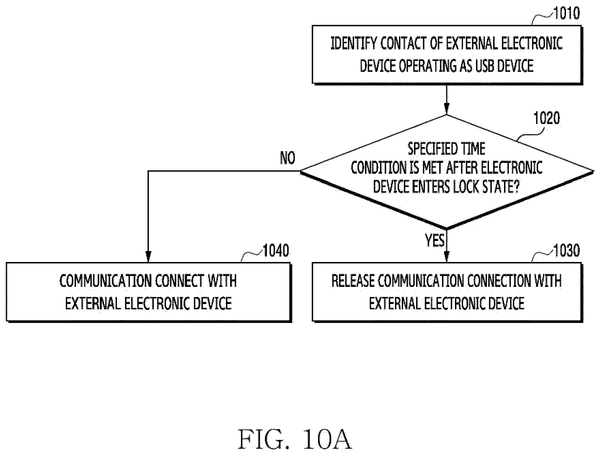

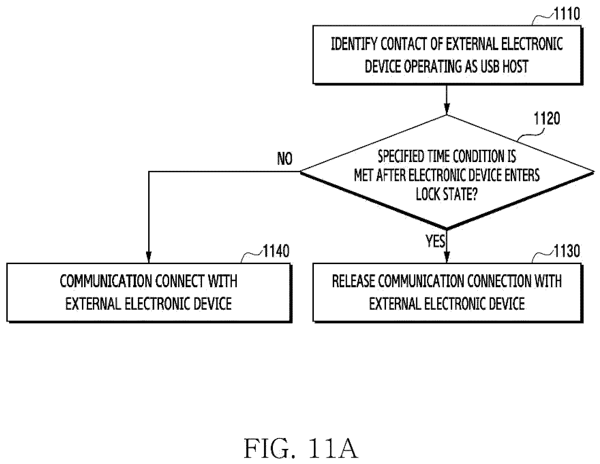

In the operation 930, the electronic device 101 may perform an operation corresponding to the lock state of the electronic device 101. For example, the operation corresponding to the lock state of the electronic device 101 may include an operation of determining whether to allow a communication connection with an external electronic device 102 according to the state (e.g., USB_NOTIFY_LOCK_USB_WORK, or USB_NOTIFY_LOCK_USB_RESTRICT) of the electronic device 101 according to security setting information 255. For example, the operation corresponding to the lock state of the electronic device 101 may include the operation of determining whether to allow the communication connection with the external electronic device 102 according to whether a specified condition is met when the state of the electronic device 101 according to the security setting information 255 is in locking and restricting (e.g., USB_NOTIFY_LOCK_USB_RESTRICT). The operation 930 may be described with reference to FIGS. 10A to 10D and 11A to 11C.

In the operation 940, the electronic device 101 may perform an operation corresponding to the unlock state of the electronic device 101. For example, when the state of the electronic device 101 is the unlock state (e.g., USB_NOTIFY_UNLOCK), the electronic device 101 may establish a communication connection with the external electronic device 102 according to a role (e.g., a USB host or a USB device (or a client)) of the electronic device 101. For example, when operating as the USB host, the electronic device 101 may perform enumeration of the external electronic device 102 according to FIGS. 6 and 7. For example, when operating as the USB device, the electronic device 101 may transmit descriptors to the external electronic device 102 according to the request from the external electronic device 102 of FIGS. 6 and 7.

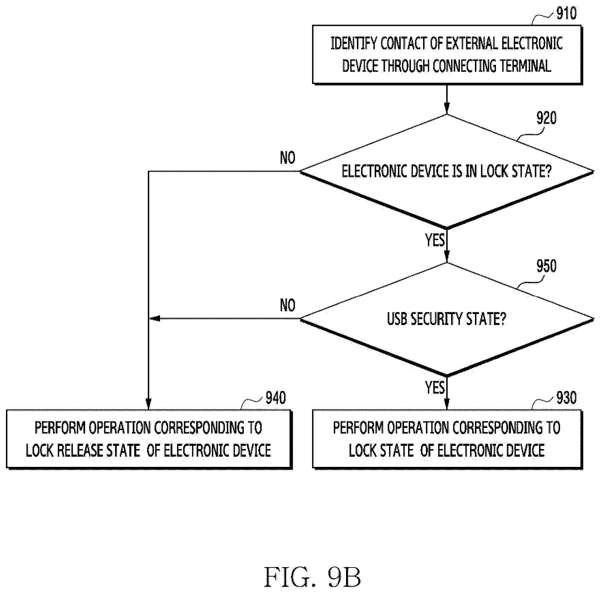

FIG. 9B is a flowchart indicating an example in which an electronic device performs different operations according to a USB security state, according to an embodiment.

FIG. 9B may be described with reference to FIGS. 1 to 8. Operations 910 to 940 of FIG. 9B may correspond to the operations 910 to 940 of FIG. 9A. An order of the operations of FIG. 9B may be changed. For example, the operation 920 may be performed after the operation 950. For example, according to a 'YES' determination in the operation 950, the operation 920 may be performed.

Referring to FIG. 9B, in the operation 910, an electronic device 101 may identify a contact of an external electronic device 102 through a connecting terminal 263.

In the operation 920, the electronic device 101 may determine whether the electronic device 101 is in a lock state. In the operation 920, the electronic device 101 may perform the operation 950 based on determining that the electronic device 101 is in the lock state. In the operation 920, the electronic device 101 may perform the operation 940 based on determining that electronic device 101 is not in the lock state (or is in an unlock state).

In the operation 950, the electronic device 101 may determine whether it is a USB security state. The electronic device 101 may determine whether a security setting is the enabled USB security state based on security setting information 255 from a security setting application 451. The electronic device 101 may determine whether the security setting is in the disabled USB security release state based on the security setting information 255 from the security setting application 451.

In the operation 950, the electronic device 101 may perform the operation 930 based on determining that the electronic device 101 is in the USB security state. In the operation 950, the electronic device 101 may perform the operation 940 based on determining that the electronic device 101 is not in the USB security state (or is in a USB security release state).

In the operation 930, the electronic device 101 may perform the operation corresponding to the lock state of the electronic device 101.

In the operation 940, the electronic device 101 may perform an operation corresponding to the unlock state of the electronic device 101. According to an embodiment, the electronic device 101 may establish a communication connection with the external electronic device 102 according to locking and allowing (e.g., USB_NOTIFY_LOCK_USB_WORK) in case that the electronic device 101 is in the lock state but in the USB security release state (that is, in case of the 'YES' determination in the operation 920 and a 'NO' determination in the operation 950). For example, the electronic device 101 may establish the communication connection with the external electronic device 102 according to a role (e.g., a USB host or a USB device (or a client) of the electronic device 101 based on a state of the electronic device 101 being in locking and allowing (e.g., USB_NOTIFY_LOCK_USB_WORK). For example, when operating as the USB host, the electronic device 101 may perform enumeration of the external electronic device 102 according to FIGS. 6 and 7. For example, when operating as the USB device, the electronic device 101 may deliver descriptors to the external electronic device 102 according to the request of the external electronic device 102 according to FIGS. 6 and 7.

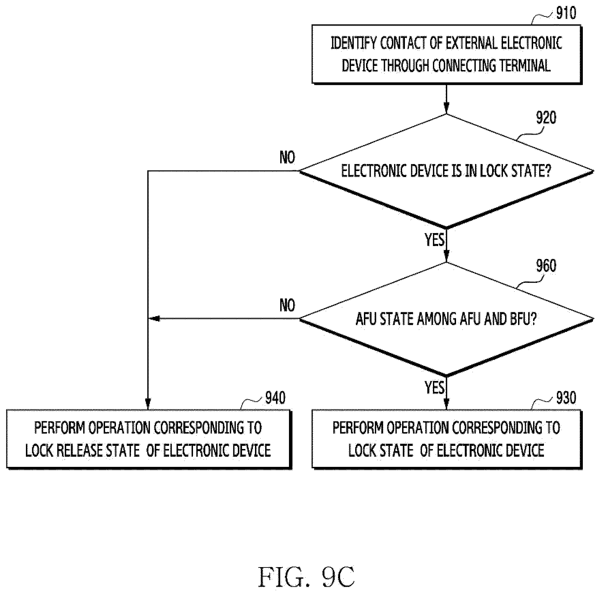

FIG. 9C is a flowchart indicating an example in which an electronic device performs different operations according to an after first unlock (AFU) state, according to an embodiment.

FIG. 9C may be described with reference to FIGS. 1 to 8. Operations 910 to 940 of FIG. 9C may correspond to the operations 910 to 940 of FIG. 9A. An order of the operations of FIG. 9C may be changed. For example, the operation 920 may be performed after the operation 960. For example, the operation 920 may be performed according to a 'YES' determination in the operation 960.

Referring to FIG. 9C, in the operation 910, an electronic device 101 may identify a contact of an external electronic device 102 through a connecting terminal 263.

In the operation 920, the electronic device 101 may determine whether the electronic device 101 is in a lock state. In the operation 920, the electronic device 101 may perform the operation 960 based on determining that the electronic device 101 is in the lock state. In the operation 920, the electronic device 101 may perform the operation 940 based on determining that the electronic device 101 is not in the lock state (or is in an unlock state).

In the operation 960, the electronic device 101 may determine whether it is an AFU state among the after first unlock (AFU) and a before first unlock (BFU). In an embodiment, the AFU state may indicate a state of the electronic device 101 in which the lock state of the electronic device101 was released before according to a boot complete of the electronic device 101. In an embodiment, the BFU state may indicate a state of the electronic device 101 in which the lock state of the electronic device 101 was not released before according to the boot complete of the electronic device 101. Accordingly, the BFU state may be a state in which the lock state of the electronic device 101 according to the boot complete of the electronic device 101 is being maintained.

In the operation 960, the electronic device 101 may perform the operation 930 based on determining that the electronic device 101 is in the AFU state. In the operation 960, the electronic device 101 may perform the operation 940 based on determining that the electronic device 101 is in the BFU state.

In the operation 930, the electronic device 101 may perform an operation corresponding to the lock state of the electronic device 101.

In the operation 940, the electronic device 101 may perform an operation corresponding to the unlock state of the electronic device 101. According to an embodiment, the electronic device 101 may establish a communication connection with the external electronic device 102 when the electronic device 101 is in the lock state but in the BFU state (that is, in case of the 'YES' determination in the operation 920 and a 'NO' determination in the operation 960. For example, the electronic device 101 may establish a communication connection with the external electronic device 102 according to a role (e.g., a USB host or a USB device (or a client)) of the electronic device 101 based on that the electronic device 101 is in the BFU state. For example, when operating as the USB host, the electronic device 101 may perform enumeration of the external electronic device 102 according to FIGS. 6 and 7. For example, when operating as the USB device, the electronic device 101 may deliver the descriptors to the external electronic device 102 according to the request of the external electronic device 102 of FIGS. 6 and 7.

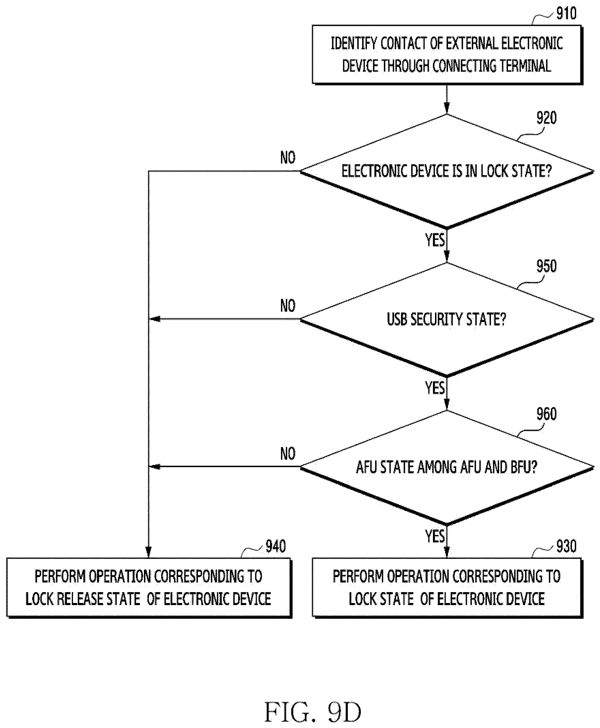

FIG. 9D is a flowchart indicating an example in which an electronic device performs different operations according to whether different conditions are met, according to an embodiment.

FIG. 9D may be described with reference to FIGS. 1 to 8. Operations 910 to 940 of FIG. 9D may correspond to the operations 910 to 940 of FIG. 9A. Operation 950 of FIG. 9D may correspond to the operation 950 of FIG. 9B. Operation 960 of FIG. 9D may correspond to the operation 960 of FIG. 9C. An order of the operations 920, 950, and 960 of FIG. 9D may be changed. For example, according to a 'YES' determination in the operations 920, 950, and 960, other operations 920, 950, or 960 may be performed.

Referring to FIG. 9D, in the operation 910, an electronic device 101 may identify a contact of an external electronic device 102 through a connecting terminal 263.

In the operation 920, the electronic device 101 may determine whether the electronic device 101 is in a lock state. In the operation 920, the electronic device 101 may perform the operation 950 based on determining that the electronic device 101 is in the lock state. In the operation 920, the electronic device 101 may perform the operation 940 based on determining that the electronic device 101 is not in the lock state (or, is in an unlock state).

In the operation 950, the electronic device 101 may determine whether it is in a USB security state. In the operation 950, the electronic device 101 may perform the operation 960 based on determining that the electronic device 101 is in the USB security state. In the operation 950, the electronic device 101 may perform the operation 940 based on determining that the electronic device 101 is not in the lock state (or, is in the unlock state).

In the operation 960, the electronic device 101 may determine whether it is an AFU state among an AFU and a BFU. In the operation 960, the electronic device 101 may perform the operation 930 based on that the electronic device 101 is in the AFU state. In the operation 960, the electronic device 101 may perform the operation 940 based on that the electronic device 101 is in the BFU state.

In the operation 930, the electronic device 101 may perform an operation corresponding to the lock state of the electronic device 101. In the operation 940, the electronic device 101 may perform an operation corresponding to the unlock state of the electronic device 101.

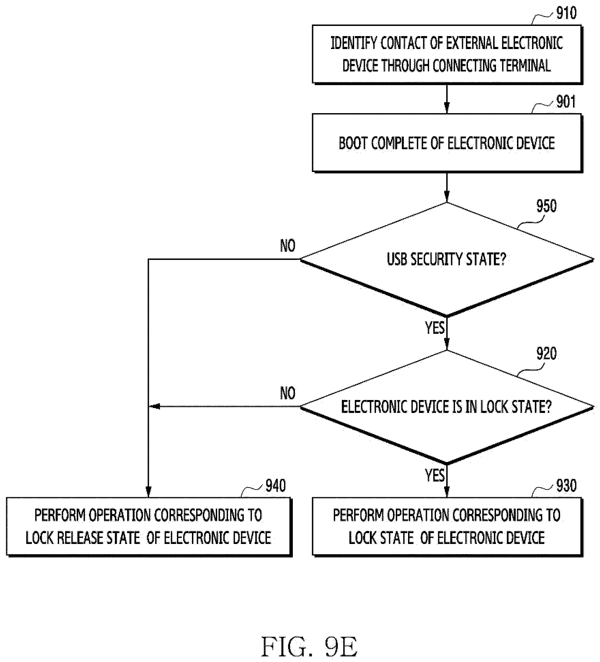

FIG. 9E is a flowchart indicating an example in which an electronic device performs different operations according to a lock state, according to an embodiment.

FIG. 9E may be described with reference to FIGS. 1 to 8. Operations 901, 910 to 940 of FIG. 9E may correspond to the operations 901, 910 to 940 of FIG. 9A. Operation 950 of FIG. 9E may correspond to the operation 950 of FIG. 9B.

Referring to FIG. 9E, in the operation 910, an electronic device 101 may identify a contact of an external electronic device 102 through a connecting terminal 263. In an embodiment, the electronic device 101 may identify the contact of the external electronic device 102 through the connecting terminal 263 before a boot complete. For example, the electronic device 101 may identify the contact of the external electronic device 102 through the connecting terminal 263 before an operating system (e.g., the 142 of FIG. 1) is loaded on volatile memory (e.g., 132 of FIG. 1). For example, the electronic device 101 may identify the contact of the external electronic device 102 through the connecting terminal 263 by using an operating system lighter than the operating system (e.g., the 142 in FIG. 1). In an embodiment, the contact of the external electronic device 102 through the connecting terminal 263 may be made before the electronic device 101 is booted.

In the operation 901, the electronic device 101 may identify the boot complete of the electronic device 101. In an embodiment, the electronic device 101 may boot the electronic device 101 (e.g., an operation of loading the operating system 142 on the volatile memory 132). In an embodiment, the electronic device 101 may boot the electronic device 101 in response to an input for turning on the electronic device 101 in a state in which the electronic device 101 is turned off. In an embodiment, when the booting of the electronic device 101 is completed, the electronic device 101 may broadcast the boot complete (e.g., BOOT_COMPLETED) to other applications.

In the operation 950, the electronic device 101 may determine whether it is in a USB security state. The electronic device 101 may determine whether it is in the USB security state in which a security setting is enabled based on security setting information 255 from a security setting application 451. The electronic device 101 may determine whether it is in a USB security release state in which the security setting is disabled based on the security setting information 255 from the security setting application 451.

In the operation 950, the electronic device 101 may perform the operation 920 based on determining that the electronic device 101 is in the USB security state. In the operation 950, the electronic device 101 may perform the operation 940 based on determining that the electronic device 101 is not in the USB security state (or is in the USB security release state.)

In the operation 920, the electronic device 101 may determine whether the electronic device 101 is in a lock state. In the operation 920, the electronic device 101 may perform the operation 930 based on determining that electronic device 101 is in the lock state. In the operation 920, the electronic device 101 may perform the operation 940 based on determining that electronic device 101 is not in the lock state (or in an unlock state).

In the operation 930, the electronic device 101 may perform an operation corresponding to the lock state of the electronic device 101. In the operation 940, the electronic device 101 may perform an operation corresponding to the unlock state of the electronic device 101.

FIG. 10A is a flowchart indicating an example in which an electronic device determines whether to establish a communication connection with respect to an external electronic device operating as a USB device according to a lock time, according to an embodiment.

FIG. 10A may illustrate an example in which an electronic device 101 operates as a USB host and an external electronic device 102 operates as a USB device. FIG. 10A may be described with reference to FIGS. 1 to 8. Operations of FIG. 10A may be included as a portion of the operation 930 of FIGS. 9A to 9D. The operations of FIG. 10A may be performed by the electronic device 101 in a locking and restricting state (e.g., USB_NOTIFY_LOCK_USB_RESTRICT).

Referring to FIG. 10A, in operation 1010, the electronic device 101 may identify a contact of the external electronic device 102 operating as the USB device. In an embodiment, the electronic device 101 may identify the contact of the external electronic device 102 operating as the USB device based on role information 251 identified through a specific pin (e.g., CC1(A5), CC2(B5) of FIG. 3) of a connecting terminal 263. In an embodiment, the role information 251 may be a resistance value of a specific pin of the connecting terminal 263 and/or a message (e.g., a power delivery (PD) message) transmitted and received through the specific pin of the connecting terminal 263.

In operation 1020, the electronic device 101 may determine whether a specified time condition is met after the electronic device 101 enters a lock state. For example, the electronic device 101 may determine that the specified time condition is met based on that the specified time (e.g., 1 hour) is elapsed after the electronic device 101 enters the lock state. For example, the electronic device 101 may determine that the specified time condition is met based on that the specified time (e.g., 1 hour) is elapsed after the electronic device 101 enters the lock state without a physical contact with another electronic device. For example, the electronic device 101 may determine whether a time point when the external electronic device 102 is contacted has elapsed by the specific time from a time point when the electronic device 101 enters the lock state. For example, the electronic device 101 may determine that the specified time condition is met based on that the specified time (e.g., 1 hour) is elapsed without the physical contact with the other electronic device after the electronic device 101 enters the lock state. For example, the electronic device 101 may determine that the specified time condition is met based on that the specified time (e.g., 1 hour) is elapsed after the electronic device 101 enters the lock state and after a communication connection with the other electronic device is released.

In the operation 1020, the electronic device 101 may perform operation 1030 based on determining that the specified time condition is met after the electronic device 101 enters the lock state. In the operation 1020, the electronic device 101 may perform operation 1040 based on determining that the specified time condition is not met after the electronic device 101 enters the lock state.

In the operation 1030, the electronic device 101 may release the communication connection with the external electronic device 102. In an embodiment, the electronic device 101 may forgo operations (e.g., operations exemplified through FIGS. 6 and 7) for enumerating the external electronic device 102 based on determining that the specified time is elapsed after entering the lock state. In an embodiment, the electronic device 101 may disable (or unload) a driver (e.g., a driver program 225, a class driver 541, a USB core 545, and/or a controller driver 550) for the USB host based on determining not to establish the communication connection (or to release the communication connection) with the external electronic device 102.

For example, the electronic device 101 may display a visual object (or a toast message) (e.g., the 421 of FIG. 4B and/or the 431 of FIG. 4C) indicating that the electronic device 101 needs to be unlocked for the communication connection with the external electronic device 102 through the operation 1030 and the display 261.

In the operation 1040, the electronic device 101 may connect the communication with the external electronic device 102. In an embodiment, the electronic device 101 may perform (or continue) an operation (e.g., the operations illustrated through FIGS. 6 and 7) for enumerating the external electronic device 102 based on determining that the specified time is not elapsed after entering the lock state.

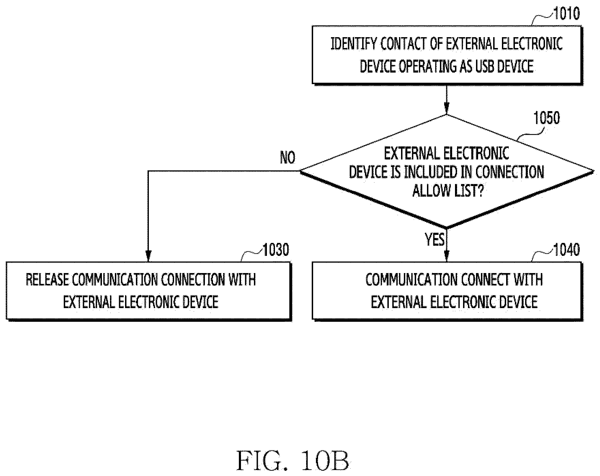

FIG. 10B is a flowchart indicating an example in which an electronic device determines whether to establish a communication connection with respect to an external electronic device operating as a USB device according to a connection allow list, according to an embodiment.

FIG. 10B may illustrate an example in which an electronic device 101 operates as a USB host and an external electronic device 102 operates as a USB device. FIG. 10B may be described with reference to FIGS. 1 to 8. Operations of FIG. 10B may be included as a portion of the operation 930 of FIGS. 9A to 9D. The operations of FIG. 10A may be performed by the electronic device 101 in a locking and restriction state (e.g., USB_NOTIFY_LOCK_USB_RESTRICT). Operations 1010, 1030, and 1040 of FIG. 10B may correspond to the operations 1010, 1030, and 1040 of FIG. 10A.

Referring to FIG. 10B, in the operation 1010, the electronic device 101 may identify a contact of the external electronic device 102 operating as the USB device.

In operation 1050, the electronic device 101 may determine whether the external electronic device 102 is included in a connection allow list. The electronic device 101 may determine whether the external electronic device 102 is included in the connection allow list based on information 253 related to a security setting that a service program 235 transmits to a driver program 225. The information 253 related to the security setting may include a list (or a whitelist) of electronic devices with which the communication connection is allowed in the locking and restriction state (e.g., USB_NOTIFY_LOCK_USB_RESTRICT).

In the operation 1050, based on determining that the external electronic device 102 is not included in the connection allow list, the electronic device 101 may perform the operation 1030. In the operation 1050, based on determining that the external electronic device 102 is included in the connection allow list, the electronic device 101 may perform the operation 1040.

In the operation 1030, the electronic device 101 may release the communication connection with the external electronic device 102. For example, the electronic device 101 may display a visual object (or a toast message) (e.g., the 421 of FIG. 4B and/or the 431 of FIG. 4C) indicating that the electronic device 101 needs to be unlocked for the communication connection with the external electronic device 102 through the operation 1030 and a display 261. In the operation 1040, the electronic device 101 may connect the communication with the external electronic device 102.

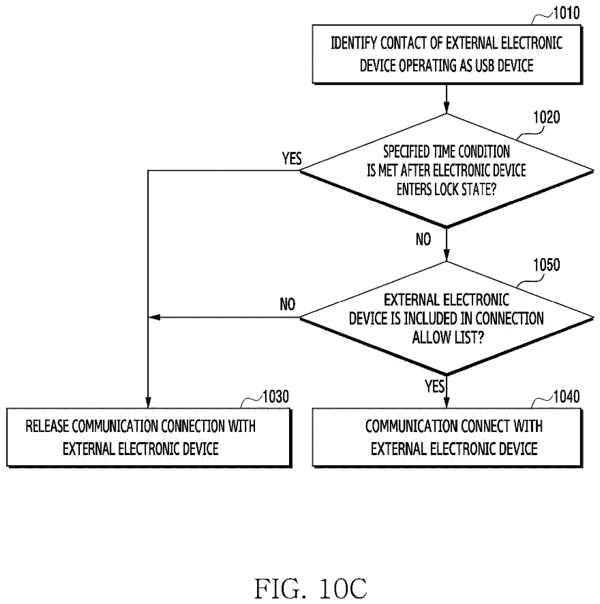

FIG. 10C is a flowchart indicating an example in which an electronic device determines whether to establish a communication connection with respect to an external electronic device operating as a USB device according to whether different conditions are met, according to an embodiment.

FIG. 10C may illustrate an example in which an electronic device 101 operates as a USB host and an external electronic device 102 operates as a USB device. FIG. 10C may be described with reference to FIGS. 1 to 8. Operations of FIG. 10C may be included as a portion of the operation 930 of FIGS. 9A to 9D. The operations of FIG. 10A may be performed by the electronic device 101 in a locking and restriction state (e.g., USB_NOTIFY_LOCK_USB_RESTRICT). Operations 1010 to 1040 of FIG. 10C may correspond to the operations 1010 to 1040 of FIG. 10A. An operation 1050 of FIG. 10C may correspond to the operation 1050 of FIG. 10B. An order of the operations of FIG. 10C may be changed. For example, the operation 1020 may be performed after the operation 1050. For example, according to a 'Yes' determination in the operation 1050, the operation 1020 may be performed.

Referring to FIG. 10C, in the operation 1010, the electronic device 101 may identify a contact of the external electronic device 102 operating as the USB device.

In the operation 1020, the electronic device 101 may determine whether a specified time condition is met after the electronic device 101 enters a lock state. In the operation 1020, based on determining that the specified time condition is met after the electronic device 101 enters the lock state, the electronic device 101 may perform the operation 1030. In the operation 1020, based on determining that the specified time condition is not met after the electronic device 101 enters the lock state, the electronic device 101 may perform the operation 1050.

In the operation 1050, the electronic device 101 may determine whether the external electronic device 102 is included in a connection allow list. In the operation 1050, based on determining that the external electronic device 102 is not included in the connection allow list, the electronic device 101 may perform the operation 1030. In the operation 1050, based on determining that the external electronic device 102 is included in the connection allow list, the electronic device 101 may perform the operation 1040.

In the operation 1030, the electronic device 101 may release a communication connection with external electronic device 102. For example, the electronic device 101 may display a visual object (or a toast message) (e.g., the 421 of FIG. 4B and/or the 431 of FIG. 4C) indicating that the electronic device 101 needs to be unlocked for the communication connection with the external electronic device 102 through the operation 1030 and a display 261. In the operation 1040, the electronic device 101 may connect the communication with the external electronic device 102.

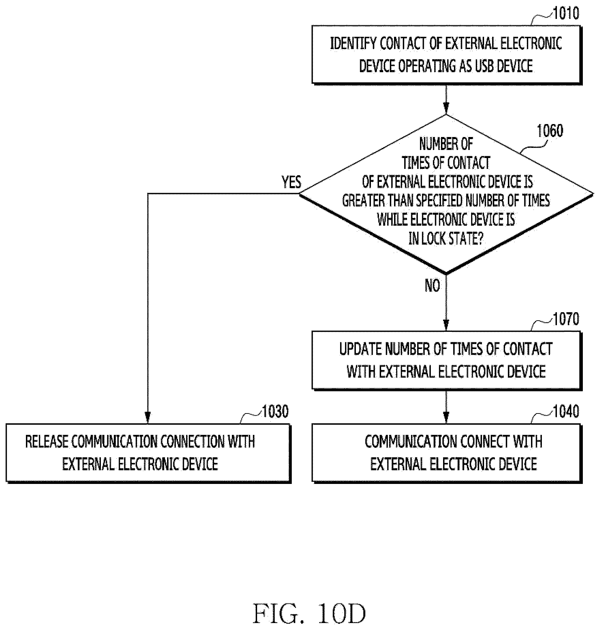

FIG. 10D is a flowchart indicating an example in which an electronic device determines whether to establish a communication connection with respect to an external electronic device operating as a USB device according to the number of times of contact during a lock state, according to an embodiment.

FIG. 10D may illustrate an example in which an electronic device 101 operates as a USB host and an external electronic device 102 operates as a USB device. FIG. 10D may be described with reference to FIGS. 1 to 8. Operations of FIG. 10D may be included as a portion of the operation 930 of FIGS. 9A to 9D. The operations of FIG. 10A may be performed by the electronic device 101 in a locking and restriction state (e.g., USB_NOTIFY_LOCK_USB_RESTRICT). Operations 1010, 1030, and 1040 of FIG. 10D may correspond to the operations 1010, 1030, and 1040 of FIG. 10A.

Referring to FIG. 10D, in the operation 1010, the electronic device 101 may identify a contact of the external electronic device 102 operating as the USB device.

In operation 1060, the electronic device 101 may determine whether the number of times of contact of the external electronic device 102 during a lock state of the electronic device 101 exceeds a specified number of times (e.g., 10 times). In an embodiment, the electronic device 101 may determine whether the number of times of contact of the external electronic device 102 exceeds the specified number of times (e.g., 10 times) during the current lock state.

In the operation 1060, based on determining that the number of times of contact of the external electronic device 102 exceeds the specified number of times (e.g., 10 times), the electronic device 101 may perform the operation 1030. In the operation 1060, based on determining that the number of times of contact of the external electronic device 102 does not exceed the specified number of times (e.g., 10 times), the electronic device 101 may perform operation 1070.

In the operation 1070, the electronic device 101 may update the number of times of contact with the external electronic device 102. In an embodiment, the electronic device 101 may increase the number of times of contact of the external electronic device 102 by 1 during the current lock state.

In the operation 1030, the electronic device 101 may release a communication connection with the external electronic device 102. For example, the electronic device 101 may display a visual object (or toast message) (e.g., the 421 of FIG. 4B and/or the 431 of FIG. 4C) indicating that the electronic device 101 needs to be unlocked for the communication connection with the external electronic device 102 through the operation 1030 and a display 261. In the operation 1040, the electronic device 101 may connect the communication with the external electronic device 102.

In FIG. 10D, the electronic device 101 is illustrated as identifying the number of times of contact with the external electronic device 102, but this is only an example. For example, the electronic device 101 may identify the number of times of release of the connection with the external electronic device 102. In this case, in the operation 1060, the electronic device 101 may determine whether the number of times of release of contact of the external electronic device 102 during the lock state of the electronic device 101 exceeds the specified number of times (e.g., 10 times). In this case, in the operation 1070, the electronic device 101 may update the number of times of release of contact with the external electronic device 102.

FIG. 11A is a flowchart indicating an example in which an electronic device determines whether to establish a communication connection with respect to an external electronic device operating as a USB host according to a lock time, according to an embodiment.

FIG. 11A may illustrate an example in which an electronic device 101 operates as a USB device and an external electronic device 102 operates as a USB host. FIG. 11A may be described with reference to FIGS. 1 to 8. Operations of FIG. 11A may be included as a portion of the operation 930 of FIGS. 9A to 9D. The operations of FIG. 11A may be performed by the electronic device 101 in a locking and restriction state (e.g., USB_NOTIFY_LOCK_USB_RESTRICT).

Referring to FIG. 11A, in operation 1110, the electronic device 101 may identify a contact of the external electronic device 102 operating as the USB host. In an embodiment, the electronic device 101 may identify the contact of the external electronic device 102 operating as the USB host based on role information 251 identified through a specific pin (e.g., CC1 (A5) and CC2 (B5) of FIG. 3) of a connection terminal 263. In an embodiment, the role information 251 may be a resistance value of the specific pin of the connection terminal 263 and/or a message (e.g., a power delivery (PD) message) transmitted and received through the specific pin of the connection terminal 263.

In operation 1120, the electronic device 101 may determine whether a specified time condition is met after the electronic device 101 enters a lock state. For example, the electronic device 101 may determine that the specified time condition is met based on that a specified time (e.g., 1 hour) is elapsed after the electronic device 101 enters the lock state. For example, the electronic device 101 may determine that the specified time condition is met based on that the specified time (e.g., 1 hour) is elapsed after the electronic device 101 enters the lock state without a physical contact with another electronic device. For example, the electronic device 101 may determine whether a time point when the external electronic device 102 is contacted has elapsed by the specific time from a time point when the electronic device 101 enters the lock state. For example, the electronic device 101 may determine that the specified time condition is met based on that the specified time (e.g., 1 hour) is elapsed without the physical contact with the other electronic device after the electronic device 101 enters the lock state. For example, the electronic device 101 may determine that the specified time condition is met based on that the specified time (e.g., 1 hour) is elapsed after the electronic device 101 enters the lock state and after a communication connection with other electronic devices is released.

In operation the 1120, based on determining that the specified time condition is met after the electronic device 101 enters the lock state, the electronic device 101 may perform operation 1130. In the operation 1120, based on determining that the specified time condition is not met after the electronic device 101 enters the lock state, the electronic device 101 may perform operation 1140.

In the operation 1130, the electronic device 101 may release the communication connection with the external electronic device 102. In an embodiment, the electronic device 101 may cease an operation for enumerating the external electronic device 102 (e.g., the operations exemplified through FIGS. 6 and 7) based on determining that the specified time is elapsed after entering the lock state. For example, the electronic device 101 may ignore a request of a descriptor from the external electronic device 102 based on determining that the specified time is elapsed after entering the lock state.

In an embodiment, the electronic device 101 may disable (or unload) a driver (e.g., a composite driver 561, a USB gadget driver 565, and/or a controller driver 550) for the USB device based on determining not to establish the communication connection (or releasing the communication connection) with the external electronic device 102.

For example, the electronic device 101 may display a visual object (or a toast message) (e.g., the 421 of FIG. 4B and/or the 431 of FIG. 4C) indicating that the electronic device 101 needs to be unlocked for the communication connection with the external electronic device 102 through the operation 1130 and a display 261.

In the operation 1140, the electronic device 101 may connect the communication with the external electronic device 102. In an embodiment, the electronic device 101 may perform (or continue) an operation for enumerating the external electronic device 102 (e.g., the operations exemplified through FIGS. 6 and 7) based on determining that the specified time is not elapsed after entering the lock state. For example, the electronic device 101 may transmit a descriptor to the external electronic device 102 according to the request of the descriptor from the external electronic device 102.

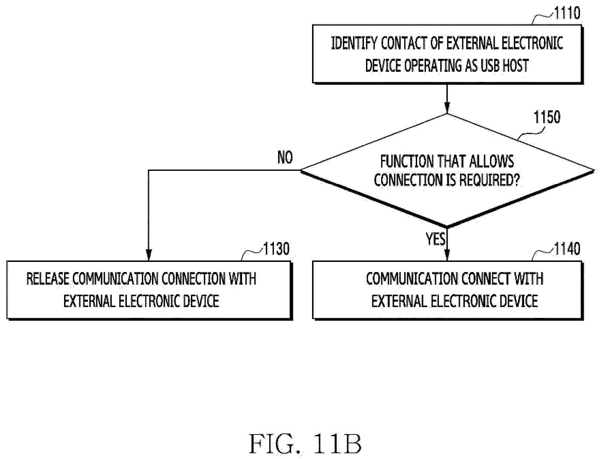

FIG. 11B is a flowchart indicating an example in which an electronic device determines whether to establish a communication connection with respect to an external electronic device operating as a USB host according to a function of the communication connection, according to an embodiment.

FIG. 11B may illustrate an example in which an electronic device 101 operates as a USB device and an external electronic device 102 operates as a USB host. FIG. 11B may be described with reference to FIGS. 1 to 8. Operations of FIG. 11B may be included as a portion of the operation 930 of FIGS. 9A to 9D. The operations of FIG. 11A may be performed by the electronic device 101 in a locking and restriction state (e.g., USB_NOTIFY_LOCK_USB_RESTRICT). Operations 1110, 1130, and 1140 of FIG. 11B may correspond to the operations 1110, 1130, and 1140 of FIG. 11A.

Referring to FIG. 11B, in the operation 1110, the electronic device 101 may identify a contact of the external electronic device 102 operating as the USB host.

In operation 1150, electronic device 101 may determine whether a function that allows a connection is requested. For example, the electronic device 101 may determine whether the function that allows the connection is requested according to a setting of an application (e.g., a navigation application, an application for transferring data to an automobile (or an electronic device in the automobile). For example, the electronic device 101 may determine whether loading a functional driver for a function to support a specified mode among various modes of the USB device is required. For example, the function that allows the connection may be AOA among a media transfer protocol (MTP), tethering, an android debug bridge (ADB), an abstract control model (ACM), and the android open access (AOA).

For example, the electronic device 101 may determine that the function that allows the connection is requested based on a loading request for the USB function driver for the function that allows the connection. For example, the electronic device 101 may determine that a function that does not allow the connection is requested based on a loading request for the USB function driver for the function that does not allow the connection.

For example, the electronic device 101 may determine that the function that allows the connection is requested based on that the USB function driver for the function that allows the connection is loaded in the composite driver 561. For example, the electronic device 101 may determine that the function that does not allow the connection is requested based on that the USB function driver for the function that does not allow the connection is loaded in the composite driver 561.

In the operation 1150, based on determining that the function that does not allow the connection is requested, the electronic device 101 may perform the operation 1130. In the operation 1150, based on determining that the function that allows the connection is requested, the electronic device 101 may perform the operation 1140.

In the operation 1130, the electronic device 101 may release the communication connection with the external electronic device 102. For example, the electronic device 101 may display a visual object (or a toast message) (e.g., the 421 of FIG. 4B and/or the 431 of FIG. 4C) indicating that the electronic device 101 needs to be unlocked for the communication connection with the external electronic device 102 through the operation 1130 and a display 261. In the operation 1140, the electronic device 101 may connect the communication with the external electronic device 102.

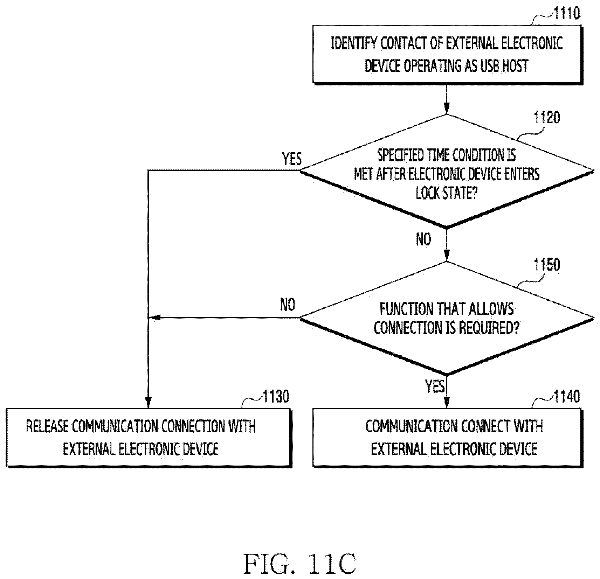

FIG. 11C is a flowchart indicating an example in which an electronic device determines whether to establish a communication connection with respect to an external electronic device operating as a USB host according to whether different conditions are met, according to an embodiment.

FIG. 11C may illustrate an example in which an electronic device 101 operates as a USB device and an external electronic device 102 operates as a USB host. FIG. 11C may be described with reference to FIGS. 1 to 8. Operations of FIG. 11C may be included as a portion of the operation 930 of FIG. 9A to 9D. The operations of FIG. 11A may be performed by the electronic device 101 in a locking and restriction state (e.g., USB_NOTIFY_LOCK_USB_RESTRICT). Operations 1110 to 1140 of FIG. 11C may correspond to the operations 1110 to 1140 of FIG. 11A. Operation 1150 of FIG. 11C may correspond to the operation 1150 of FIG. 11B. An order of the operations of FIG. 11C may be changed. For example, the operation 1120 may be performed after the operation 1150. For example, according to a 'Yes' determination in the operation 1150, the operation 1120 may be performed.

Referring to FIG. 11C, in the operation 1110, the electronic device 101 may identify a contact of the external electronic device 102 operating as the USB host.

In the operation 1120, the electronic device 101 may determine whether a specified time condition is met after the electronic device 101 enters a lock state. In the operation 1120, based on determining that the specified time condition is met after the electronic device 101 enters the lock state, the electronic device 101 may perform the operation 1130. In the operation 1120, based on determining that the specified time condition is not met after the electronic device 101 enters the lock state, the electronic device 101 may perform the operation 1150.

In the operation 1150, the electronic device 101 may determine whether a function that allows a connection is requested. In operation 1150, based on determining that a function that does not allow the connection is requested, the electronic device 101 may perform the operation 1130. In the operation 1150, based on determining that the function that allows the connection is requested, the electronic device 101 may perform the operation 1140.

In the operation 1130, the electronic device 101 may release the communication connection with the external electronic device 102. For example, the electronic device 101 may display a visual object (or a toast message) (e.g., the 421 of FIG. 4B and/or the 431 of FIG. 4C) indicating that the electronic device 101 needs to be unlocked for the communication connection with the external electronic device 102 through the operation 1130 and a display 261. In the operation 1140, the electronic device 101 may connect the communication with the external electronic device 102.

The technical problem to be solved by the present disclosure is not limited to the technical problems mentioned above, and other unmentioned technical problems will be clearly understood by those skilled in the art to which the present disclosure pertains.

As described above, an electronic device 101 may comprise communication circuitry 265, at least one processor 120 comprising processing circuitry, and memory 130, comprising one or more storage mediums, storing instructions. The instructions, when executed by the at least one processor 120 individually or collectively, may cause the electronic device 101 to, while the electronic device 101 is in a lock state, identify that an external electronic device 102 is physically contacted, through the communication circuitry 265. The instructions, when executed by the at least one processor 120 individually or collectively, may cause the electronic device 101 to, while the electronic device 101 is in the lock state, based on identifying that the external electronic device 102 is physically contacted, receive, from the external electronic device 102 through the communication circuitry 265, a descriptor of the external electronic device 102. The instructions, when executed by the at least one processor 120 individually or collectively, may cause the electronic device 101 to, while the electronic device 101 is in the lock state, based on identifying, based on the descriptor, that the external electronic device 102 is included in a connection allow list of the electronic device 101, establish, through the communication circuitry 265, a communication connection with the external electronic device 102. The instructions, when executed by the at least one processor 120 individually or collectively, may cause the electronic device 101 to, while the electronic device 101 is in the lock state, based on identifying, based on the descriptor, that the external electronic device 102 is not included in the connection allow list, forgo the communication connection with the external electronic device102.

The instructions, when executed by the at least one processor 120 individually or collectively, may cause the electronic device 101 to, while the electronic device 101 is in the lock state, identify whether a state of the electronic device 101 is a before first unlock (BFU) state or an after first unlock (AFU) state. The instructions, when executed by the at least one processor 120 individually or collectively, may cause the electronic device 101 to, while the electronic device 101 is in the lock state, based on identifying that the state of the electronic device 101 is the AFU state, identify whether the communication connection between the external electronic device 102 and the electronic device 101 was established before. The instructions, when executed by the at least one processor 120 individually or collectively, may cause the electronic device 101 to, while the electronic device101 is in the lock state, based on identifying that the state of the electronic device 101 is the BFU state, establish, through the communication circuitry 265, the communication connection with the external electronic device 102.

The instructions, when executed by the at least one processor 120 individually or collectively, may cause the electronic device 101 to, while the electronic device 101 is in the lock state, determine whether a specified time condition is met after the electronic device 101 enters the lock state. The instructions, when executed by the at least one processor 120 individually or collectively, may cause the electronic device 101 to, based on determining that the specified time condition is not met, identify whether the communication connection between the external electronic device 102 and the electronic device 101 was established before. The instructions, when executed by the at least one processor 120 individually or collectively, may cause the electronic device 101 to, based on determining that the specified time condition is met, forgo the communication connection with the external electronic device.

The instructions, when executed by the at least one processor 120 individually or collectively, may cause the electronic device 101 to, while the electronic device 101 is in the lock state, identify the number of times that the external electronic device 102 is physically contacted. The instructions, when executed by the at least one processor 120 individually or collectively, may cause the electronic device 101 to, while the electronic device 101 is in the lock state, based on that the number of times is equal to or less than a specified number of times, identify whether the communication connection between the external electronic device 102 and the electronic device 101 was established before. The instructions, when executed by the at least one processor 120 individually or collectively, may cause the electronic device 101 to, while the electronic device 101 is in the lock state, based on that the number of times is greater than the specified number of times, forgo the communication connection with the external electronic device 102.

The instructions, when executed by the at least one processor 120 individually or collectively, may cause the electronic device 101 to, while the electronic device 101 is in the lock state, based on that the external electronic device is physically contacted, identify a role of the electronic device 101. The instructions, when executed by the at least one processor 120 individually or collectively, may cause the electronic device 101 to, while the electronic device 101 is in the lock state, receive, from the external electronic device 102 through the communication circuitry 265, the descriptor of the external electronic device 102 according to that the role of the electronic device 101 is determined to be a host. The instructions, when executed by the at least one processor 120 individually or collectively, may cause the electronic device 101 to, while the electronic device 101 is in the lock state, transmit, to the external electronic device 102 through the communication circuitry 265, a descriptor of the electronic device 101 according to that the role of the electronic device 101 is determined to be a client.

The instructions, when executed by the at least one processor 120 individually or collectively, may cause the electronic device 101 to, according to that the role of the electronic device 101 is determined to be the client, while the electronic device 101 is in the lock state, determine whether a specified time condition is met after the electronic device 101 entered the lock state. The instructions, when executed by the at least one processor 120 individually or collectively, may cause the electronic device 101 to, according to that the role of the electronic device 101 is determined to be the client, while the electronic device 101 is in the lock state, based on determining that the specified time condition is not met, establish, through the communication circuitry 265, the communication connection with the external electronic device 102. The instructions, when executed by the at least one processor 120 individually or collectively, may cause the electronic device 101 to, according to that the role of the electronic device 101 is determined to be the client, while the electronic device 101 is in the lock state, based on determining that the specified time condition is met, forgo the communication connection with the external electronic device 102.

The instructions, when executed by the at least one processor 120 individually or collectively, may cause the electronic device 101 to, according to that the role of the electronic device101 is determined to be the client, while the electronic device101 is in the lock state, determine whether a function for transmitting and receiving data through the communication connection with the external electronic device 102 is a specified function. The instructions, when executed by the at least one processor 120 individually or collectively, may cause the electronic device 101 to, according to that the role of the electronic device 101 is determined to be the client, while the electronic device 101 is in the lock state, establish the communication connection with the external electronic device 102 based on determining that the function for transmitting and receiving data through the communication connection is the specified function. The instructions, when executed by the at least one processor 120 individually or collectively, may cause the electronic device 101 to, according to that the role of the electronic device 101 is determined to be the client, while the electronic device 101 is in the lock state, forgo the communication connection with the external electronic device 102 based on determining that the function for transmitting and receiving data through the communication connection is another function different from the specified function.

The specified function may be a function that supports communication between the electronic device 101 and the external electronic device 102 while the electronic device 101 operates as an accessory device and the external electronic device 102 operates as a host in an accessory mode.

The instructions, when executed by the at least one processor 120 individually or collectively, may cause the electronic device 101 to, while the electronic device 101 is in the lock state, based on identifying that the external electronic device 102 is physically contacted, identify a state of the electronic device 101. The state, while in the lock state, may include a first state allowing the communication connection with the external electronic device 102 and a second state restricting the communication connection with the external electronic device 102. The instructions, when executed by the at least one processor 120 individually or collectively, may cause the electronic device 101 to, while the electronic device 101 is in the lock state, based on that the state of the electronic device 101 is the first state, establish, through the communication circuitry 265, the communication connection with the external electronic device 102. The instructions, when executed by the at least one processor 120 individually or collectively, may cause the electronic device 101 to, while the electronic device 101 is in the lock state, based on that the state of the electronic device 101 is the second state, determine whether to establish the communication connection with the external electronic device 102 based on the descriptor.

The instructions, when executed by the at least one processor120 individually or collectively, may cause the electronic device101 to, while the external electronic device102 is physically contacted, forgo, through the communication circuitry, the communication connection with the external electronic device 102 by disabling a driver program225 for the communication circuitryry265.

The instructions, when executed by the at least one processor 120 individually or collectively, may cause the electronic device 101 to, disable the driver program 225 by unloading the driver program 225 for the communication circuitry 265 loaded in the memory 130.

The instructions, when executed by the at least one processor 120 individually or collectively, may cause the electronic device 101 to, while the electronic device 101 is in the lock state, based on determining to forgo the communication connection with the external electronic device 102, display, through the display, a visual object 421or 431 indicating that release of the lock state is required for the communication connection with the external electronic device 102.

The communication circuitry 265 may be configured to support a communication connection based on universal serial bus (USB).

As described above, a method may be performed by an electronic device 101. The method may comprise, while the electronic device 101 is in a lock state, identifying that an external electronic device 102 is physically contacted, through communication circuitry 265 of the electronic device 101. The method may comprise, while the electronic device 101 is in the lock state, based on identifying that the external electronic device 102 is physically contacted, receiving, from the external electronic device 102 through the communication circuitry 265, a descriptor of the external electronic device 102. The method may comprise, while the electronic device 101 is in the lock state, based on identifying, based on the descriptor, that the external electronic device 102 is included in a connection allow list of the electronic device101, establishing, through the communication circuitry 265, a communication connection with the external electronic device 102. The method may comprise, while the electronic device 101 is in the lock state, based on identifying, based on the descriptor, that the external electronic device 102 is not included in the connection allow list, forgoing the communication connection with the external electronic device 102.

The method may comprise, while the electronic device 101 is in the lock state, identifying whether a state of the electronic device 101 is a before first unlock (BFU) state or an after first unlock (AFU) state. The method may comprise, while the electronic device 101 is in the lock state, based on identifying that the state of the electronic device 101 is the AFU state, identifying whether the communication connection between the external electronic device 102 and the electronic device 101 was established before. The method may comprise, while the electronic device 101 is in the lock state, based on identifying that the state of the electronic device 101 is the BFU state, establishing, through the communication circuitry 265, the communication connection with the external electronic device 102.

The method may comprise, while the electronic device101 is in the lock state, determining whether a specified time condition is met after the electronic device 101 enters the lock state. The method may comprise, while the electronic device 101 is in the lock state, based on determining that the specified time condition is not met, identifying whether the communication connection between the external electronic device 102 and the electronic device 101 was established before. The method may comprise, while the electronic device 101 is in the lock state, based on determining that the specified time condition is met, forgoing the communication connection with the external electronic device 102.

The method may comprise, while the electronic device 101 is in the lock state, identifying the number of times that the external electronic device 102 is physically contacted. The method may comprise, while the electronic device 101 is in the lock state, based on that the number of times is equal to or less than a specified number of times, identifying whether the communication connection between the external electronic device 102 and the electronic device 101 was established before. The method may comprise, while the electronic device 101 is in the lock state, based on that the number of times is greater than the specified number of times, forgoing the communication connection with the external electronic device 102.

The method may comprise, while the electronic device 101 is in the lock state, based on that the external electronic device 102 is physically contacted, identifying a role of the electronic device 101. The method may comprise, while the electronic device 101 is in the lock state, receiving, from the external electronic device 102 through the communication circuitry 265, the descriptor of the external electronic device 102 according to that the role of the electronic device 101 is determined to be a host. The method may comprise, while the electronic device 101 is in the lock state, transmitting, to the external electronic device 102 through the communication circuitry 265, a descriptor of the electronic device 101 according to that the role of the electronic device 101 is determined to be a client.

The method may comprise, according to that the role of the electronic device 101 is determined to be the client, while the electronic device 101 is in the lock state, determining whether a function for transmitting and receiving data through the communication connection with the external electronic device 102 is a specified function. The method may comprise, according to that the role of the electronic device 101 is determined to be the client, while the electronic device 101 is in the lock state, establishing the communication connection with the external electronic device 102 based on determining that the function for transmitting and receiving data through the communication connection is the specified function. The method may comprise, according to that the role of the electronic device 101 is determined to be the client, while the electronic device 101 is in the lock state, forgoing the communication connection with the external electronic device 102 based on determining that the function for transmitting and receiving data through the communication connection is another function different from the specified function.

As described above, a non-transitory computer readable storage medium may comprise a program including instructions. The instructions, when executed by at least one processor 120 of an electronic device 101 including communication circuitry 265 individually or collectively, may cause the electronic device 101 to, while the electronic device 101 is in a lock state, identify that an external electronic device 102 is physically contacted, through the communication circuitry 265. The instructions, when executed by the at least one processor 120 individually or collectively, may cause the electronic device 101 to, while the electronic device 101 is in the lock state, based on identifying that the external electronic device 102 is physically contacted, receive, from the external electronic device 102 through the communication circuitry 265, a descriptor of the external electronic device 102. The instructions, when executed by the at least one processor 120 individually or collectively, may cause the electronic device 101 to, while the electronic device 101 is in the lock state, based on identifying, based on the descriptor, that the external electronic device 102 is included in a connection allow list of the electronic device 101, establish, through the communication circuitry 265, a communication connection with the external electronic device 102. The instructions, when executed by the at least one processor 120 individually or collectively, may cause the electronic device 101 to, while the electronic device 101 is in the lock state, based on identifying, based on the descriptor, the external electronic device 102 is not included in the connection allow list of the electronic device 101, forgo the communication connection with the external electronic device 102.

The effects obtained from the present disclosure are not limited to the effects mentioned above, and other effects not mentioned may be clearly understood by those skilled in the art to which the present disclosure pertains.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
communication circuitry (265),
at least one processor (120) comprising processing circuitry; and
memory (130), comprising one or more storage mediums, storing instructions,
wherein the instructions, when executed by the at least one processor (120) individually or collectively, cause the electronic device (101) to:
while the electronic device (101) is in a lock state:
identify that an external electronic device (102) is physically contacted, through the communication circuitry (265),
based on identifying that the external electronic device (102) is physically contacted, receive, from the external electronic device (102) through the communication circuitry (265), a descriptor of the external electronic device (102),
based on identifying, based on the descriptor, that the external electronic device (102) is included in a connection allow list of the electronic device (101), establish, through the communication circuitry (265), a communication connection with the external electronic device (102),
based on identifying, based on the descriptor, that the external electronic device (102) is not included in the connection allow list, forgo the communication connection with the external electronic device (102).

2. The electronic device (101) of claim **1,**
wherein the instructions, when executed by the at least one processor (120) individually or collectively, cause the electronic device (101) to:
while the electronic device (101) is in the lock state:
identify whether a state of the electronic device (101) is a before first unlock, BFU, state or an after first unlock, AFU, state,
based on identifying that the state of the electronic device (101) is the AFU state, identify whether the external electronic device (102) is included in the connection allow list, and
based on identifying that the state of the electronic device (101) is the BFU state, establish, through the communication circuitry (265), the communication connection with the external electronic device (102).

3. The electronic device (101) of claim 1 or claim 2,
wherein the instructions, when executed by the at least one processor (120) individually or collectively, cause the electronic device (101) to:
while the electronic device (101) is in the lock state:
determine whether a specified time condition is met after the electronic device (101) enters the lock state,
based on determining that the specified time condition is not met, identify whether the external electronic device (102) is included in the connection allow list, and
based on determining that the specified time condition is met, forgo the communication connection with the external electronic device (102).

4. The electronic device (101) of any preceding claim,
wherein the instructions, when executed by the at least one processor (120) individually or collectively, cause the electronic device (101) to:
while the electronic device (101) is in the lock state:
identify the number of times that the external electronic device (102) is physically contacted,
based on that the number of times is equal to or less than a specified number of times, identify whether the external electronic device (102) is included in the connection allow list, and,
based on that the number of times is greater than the specified number of times, forgo the communication connection with the external electronic device (102).

5. The electronic device (101) of any preceding claim,
wherein the instructions, when executed by the at least one processor (120) individually or collectively, cause the electronic device (101) to:
while the electronic device (101) is in the lock state:
based on that the external electronic device (102) is physically contacted, identify a role of the electronic device (101),
receive, from the external electronic device (102) through the communication circuitry (265), the descriptor of the external electronic device (102) according to that the role of the electronic device (101) is determined to be a host, and
transmit, to the external electronic device (102) through the communication circuitry (265), a descriptor of the electronic device (101) according to that the role of the electronic device (101) is determined to be a client.

6. The electronic device (101) of any preceding claim,
wherein the instructions, when executed by the at least one processor (120) individually or collectively, cause the electronic device (101) to:
according to that the role of the electronic device (101) is determined to be a client, while the electronic device (101) is in the lock state:
determine whether a specified time condition is met after the electronic device (101) entered the lock state,
based on determining that the specified time condition is not met, establish, through the communication circuitry (265), the communication connection with the external electronic device (102), and
based on determining that the specified time condition is met, forgo the communication connection with the external electronic device (102).

7. The electronic device (101) of any preceding claim,
wherein the instructions, when executed by the at least one processor (120) individually or collectively, cause the electronic device (101) to:
according to that the role of the electronic device (101) is determined to be a client, while the electronic device (101) is in the lock state:
determine whether a function for transmitting and receiving data through the communication connection with the external electronic device (102) is a specified function,
establish the communication connection with the external electronic device (102) based on determining that the function for transmitting and receiving data through the communication connection is the specified function, and
forgo the communication connection with the external electronic device (102) based on determining that the function for transmitting and receiving data through the communication connection is another function different from the specified function.

8. The electronic device (101) of any preceding claim, wherein the specified function is a function that supports communication between the electronic device (101) and the external electronic device (102) while the electronic device (101) operates as an accessory device and the external electronic device (102) operates as a host in an accessory mode.

9. The electronic device (101) of any preceding claim,
wherein the instructions, when executed by the at least one processor (120) individually or collectively, cause the electronic device (101) to:
while the electronic device (101) is in the lock state:
based on identifying that the external electronic device (102) is physically contacted, identify a state of the electronic device (101), the state, while in the lock state, including a first state allowing the communication connection with the external electronic device (102) and a second state restricting the communication connection with the external electronic device (102),
based on that the state of the electronic device (101) is the first state, establish, through the communication circuitry (265), the communication connection with the external electronic device (102), and
based on that the state of the electronic device (101) is the second state, determine whether to establish the communication connection with the external electronic device (102) based on the descriptor.

10. The electronic device (101) of any preceding claim,
wherein the instructions, when executed by the at least one processor (120) individually or collectively, cause the electronic device (101) to:
while the external electronic device (102) is physically contacted, forgo, through the communication circuitry (265), the communication connection with the external electronic device (102) by disabling a driver program (225) for the communication circuitry (265).

11. The electronic device (101) of any preceding claim,
wherein the instructions, when executed by the at least one processor (120) individually or collectively, cause the electronic device (101) to:
disable the driver program (225) for the communication circuitry (265) by unloading the driver program (225) for the communication circuitry (265) loaded in the memory.

12. The electronic device (101) of any preceding claim, comprising:
a display,
wherein the instructions, when executed by the at least one processor (120) individually or collectively, cause the electronic device (101) to:
while the electronic device (101) is in the lock state:
based on determining to forgo the communication connection with the external electronic device (102), display, through the display, a visual object (421, 431) indicating that release of the lock state is required for the communication connection with the external electronic device (102).

13. The electronic device (101) of any preceding claim,
wherein the communication circuitry (265) is configured to support a communication connection based on universal serial bus, USB.

14. A method of an electronic device (101) comprising:
while the electronic device (101) is in a lock state:
identifying that an external electronic device (102) is physically contacted, through communication circuitry (265) of the electronic device (101),
based on identifying that the external electronic device (102) is physically contacted, receiving, from the external electronic device (102) through the communication circuitry (265), a descriptor of the external electronic device (102),
based on identifying, based on the descriptor, that the external electronic device (102) is included in a connection allow list of the electronic device (101), establishing, through the communication circuitry (265), a communication connection with the external electronic device (102), and
based on identifying, based on the descriptor, that the external electronic device (102) is not included in the connection allow list, forgoing the communication connection with the external electronic device (102).

15. A computer readable storage medium, comprising
one or more programs including instructions,
wherein the instructions, when executed by at least one processor (120) of an electronic device (101) including communication circuitry (265) individually or collectively, cause the electronic device (101) to perform the method of claim 14.
